# EUROPÄISCHE PATENTSCHRIFT

(11) **EP 3 390 552 B1**
(45) Veröffentlichungstag und Bekanntmachung des Hinweises auf die Patenterteilung: **13.01.2021**
(21) Anmeldenummer: 16809103.1
(22) Anmeldetag: 14.12.2016
(51) Int. Cl.: C09D 183/08, C08G 77/388, C09J 183/08, C08L 83/08

(54) **KATALYSATOR MIT POLYSILOXAN-STRUKTUREINHEIT FÜR HÄRTBARE ZUSAMMENSETZUNGEN**
CATALYST WITH POLYSILOXANE STRUCTURE UNIT FOR CURABLE COMPOSITIONS
CATALYSEUR COMPRENANT UNE UNITE STRUCTURALE DE POLYSILOXANE POUR COMPOSITIONS DURCISSABLES

(30) Priorität: 15.12.2015 EP 15200134
(43) Veröffentlichungstag der Anmeldung: 24.10.2018
(60) Teilanmeldung: 20202036.8
(73) Patentinhaber: Sika Technology AG, 6340 Baar (CH)
(72) Erfinder: CANNAS, Rita, 8600 Dübendorf (CH); BURCKHARDT, Urs, 8049 Zürich (CH)
(74) Vertreter: Sika Patent Attorneys
(86) Internationale Anmeldenummer: PCT/EP2016/081018
(87) Internationale Veröffentlichungsnummer: WO 2017/102851

(56) Entgegenhaltungen:
- EP-A1- 2 840 087
- DE-A1-102005 004 704
- HU X E ED - GENNA DOUGLAS T ET AL: "Nucleophilic ring opening of aziridines", TETRAHEDRON, ELSEVIER SCIENCE PUBLISHERS, AMSTERDAM, NL, Bd. 60, Nr. 12, 15. März 2004 (2004-03-15) , Seiten 2701-2743, XP004494252, ISSN: 0040-4020, DOI: 10.1016/J.TET.2004.01.042

## Beschreibung

### Technisches Gebiet

Die Erfindung betrifft, Amidin-Katalysatoren für härtbare Zusammensetzungen, insbesondere auf Basis von Silangruppen-haltigen Polymeren.

### Stand der Technik

Härtbare Zusammensetzungen auf der Basis von Silangruppen-haltigen Polymeren spielen eine bedeutende Rolle in vielen technischen Anwendungen, beispielsweise als Klebstoffe, Dichtstoffe oder Beschichtungen. Silangruppen-haltige Polymere sind dabei insbesondere Polyorganosiloxane, welche gemeinhin als "Silicone" bzw. "Siliconkautschuke" bezeichnet werden, und Silangruppen-haltige organische Polymere, welche auch als "silanfunktionelle Polymere", "silanmodifizierte Polymere" (SMP) oder "silanterminierte Polymere" (STP) bezeichnet werden. Ihre Aushärtung erfolgt über Vernetzungsreaktionen der Silangruppen, welche unter dem Einfluss von Feuchtigkeit hydrolysieren, als Silanolgruppen untereinander kondensieren und dabei Siloxanbindungen bilden. Zur Beschleunigung der Aushärtung werden häufig Katalysatoren eingesetzt. Sehr oft handelt es sich dabei um toxikologisch bedenkliche Stoffe, welche eine potentielle Gefährdung von Verarbeiter und Umwelt darstellen, insbesondere nach der Aushärtung der Zusammensetzung, wenn der Katalysator oder dessen Abbauprodukte durch Ausgasen, Migration oder Auswaschen freigesetzt werden.
Als Vernetzungskatalysatoren werden klassischerweise Organozinn-Verbindungen, insbesondere Dialkylzinn(IV)carboxylate, eingesetzt. Diese zeichnen sich durch eine sehr hohe Aktivität in Bezug auf die Silanol-Kondensation aus und sind sehr hydrolysebeständig; allerdings sind sie als gesundheitsschädlich und stark wassergefährdend eingestuft. Oft werden sie mit weiteren Katalysatoren kombiniert, hauptsächlich mit basischen Verbindungen wie insbesondere Aminen, welche vor allem die vorgeschaltete Hydrolyse der Silangruppen beschleunigen.

Aufgrund einer stärkeren Gewichtung von EHS-Aspekten durch Berufsverbände und Verbraucher sowie schärferer staatlicher Regulierung werden seit einiger Zeit vermehrt Anstrengungen unternommen, die Organozinn-Verbindungen durch andere, weniger toxische Katalysatoren zu ersetzen. So werden etwa Organotitanate, -zirkonate und -aluminate als alternative Metall-Katalysatoren eingesetzt. Diese haben aber zumeist eine geringere katalytische Aktivität in Bezug auf die Silanol-Kondensation und bewirken eine deutlich langsamere Vernetzung. Wegen ihrer mangelnden Hydrolysestabilität können sie beim Lagern der Zusammensetzung durch Restfeuchte der Inhaltsstoffe einen Grossteil ihrer Aktivität verlieren, wodurch sich die Aushärtung stark verlangsamt oder ganz zum Erliegen kommt.
Eine weitere Alternative zu Organozinn-Verbindungen stellen stark basische Stickstoff-Verbindungen aus der Klasse der Amidine und Guanidine dar, welche in Kombination mit den erwähnten Metall-Katalysatoren oder auch allein eingesetzt werden können. Viele der gebräuchlichen Amidin- und Guanidin-Katalysatoren, wie insbesondere 1,8-Diazabicyclo[5.4.0]undec-7-en (DBU) und 1,1,3,3-Tetramethylguanidin (TMG), sind allerdings leichtflüchtig und geruchsintensiv sowie gesundheitsschädlich und umweltgefährdend. Ausserdem neigen sie dazu, aufgrund geringer Verträglichkeit mit der Zusammensetzung zu migrieren und dadurch Separation, Ausschwitzen oder Substratverschmutzung zu verursachen. Die Verwendung von aromatischen, bei Raumtemperatur festen Amidinen und Guanidinen schafft hier Abhilfe, erfordert aber den Einsatz von geeigneten Lösemitteln und bringt Einbussen bei der katalytischen Aktivität und damit der Vernetzungsgeschwindigkeit.

Das Dokument EP 2 840 087 offenbart Guanidingruppen aufweisende Verbindungen zur Härtung von alkoxysilylgruppen haltigen Polymeren.

### Darstellung der Erfindung

Aufgabe der vorliegenden Erfindung ist es daher, einen Katalysator für die Vernetzung von härtbaren Zusammensetzungen, insbesondere auf Basis von Silangruppen-haltigen Polymeren, bereitzustellen, welcher eine hohe katalytische Aktivität besitzt und damit eine rasche Aushärtung der applizierten Zusammensetzung ermöglicht, sowie eine hohe Selektivität aufweist und somit die Lagerstabilität der Zusammensetzung nicht über Gebühr beeinträchtigt. Weiterhin soll der Katalysator einen geringen Dampfdruck und eine hohe Verträglichkeit mit solchen Zusammensetzungen aufweisen, so dass er weder zu Separierung oder Migration noch zum Verdampfen neigt, und soll möglichst geruchlos und wenig toxisch sein.
Diese Aufgabe wird durch ein Umsetzungsprodukt gemäss Anspruch 1 gelöst. Das Umsetzungsprodukt weist mindestens eine aliphatische, Amidin-Gruppe und einen Polysiloxanrest auf. Es ist bei Raumtemperatur flüssig und damit auch ohne Lösemittel einfach verarbeitbar, hat einen äusserst niedrigen Dampfdruck und ist vollständig geruchsfrei und weitgehend untoxisch. Bei der Verwendung als Katalysator zeigt das Umsetzungsprodukt eine überraschend hohe Aktivität und gute Selektivität in Bezug auf die Vernetzung von Silangruppen. Ausserdem ist es überraschenderweise sowohl mit polaren Polymeren wie Polyethern oder Polyurethanen als auch mit unpolaren Polymeren wie Silikonen gut verträglich und zeigt weder Separation noch Migration.
Mit diesen Eigenschaften ist das Umsetzungsprodukt besonders geeignet als Katalysator für die Vernetzung von Zusammensetzungen auf Basis von Silangruppen-haltigen Polymeren, wo es als alleiniger Katalysator oder in Kombination mit weiteren Katalysatoren ohne störende Geruchsimmissionen eine schnelle Aushärtung zu einem mechanisch hochwertigen und beständigen Material ermöglicht, ohne die Lagerfähigkeit der unausgehärteten Zusammensetzung zu beeinträchtigen. Es ist sowohl vor als auch nach der Aushärtung ausgezeichnet verträglich mit der Zusammensetzung und neigt weder zu Separierung noch zu Migration, im Gegensatz zu vielen Amidin- oder Guanidin-Katalysatoren aus dem Stand der Technik, welche oft ungenügend verträglich sind und dadurch unerwünschte Migrationseffekte verursachen. Das Umsetzungsprodukt ermöglicht emissions- und geruchsarme Produkte, welche weder schmierige oder klebrige Oberflächen aufweisen noch Substratverschmutzung verursachen. Schliesslich ist das Umsetzungsprodukt in einem überraschend einfachen und schnellen Verfahren ohne Hilfsstoffe und Aufbereitung oder Reinigung aus handelsüblichen, preisgünstigen Ausgangsmaterialien herstellbar. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Umsetzungsprodukt erhalten aus der Umsetzung von
- mindestens einem Amidin oder Guanidin der Formel HZ oder HX-A-Z,
   wobei
   Z für eine über ein Stickstoff-Atom gebundene aliphatische Amidin-Gruppe steht,
   A für einen zweiwertigen Kohlenwasserstoff-Rest mit 2 bis 30 C-Atomen, welcher gegebenenfalls ungesättigte Anteile und gegebenenfalls Ether-Sauerstoff oder sekundären oder tertiären Amin-Stickstoff enthält, steht, und
   X für S oder NR⁷ steht, wobei R⁷ für einen Wasserstoff-Rest oder für einen Alkyl- oder Cycloalkyl- oder Aralkyl-Rest mit 1 bis 8 C-Atomen, welcher gegebenenfalls eine tertiäre Aminogruppe oder eine Amidin- oder Guanidin-Gruppe enthält, steht,
   wobei A auch zusammen mit R⁷ für einen dreiwertigen Kohlenwasserstoff-Rest mit 5 bis 10 C-Atomen, welcher gegebenenfalls einen tertiären Amin-Stickstoff enthält, stehen kann, und
   X und Z durch eine Kette von mindestens zwei C-Atomen voneinander getrennt sind,
- mit mindestens einem Polysiloxan der Formel (II),

   P⁅L-Q]_{q} (II)

   wobei
   q für 1 oder 2 steht,
   P für einen q-wertigen Polysiloxan-Rest mit 3 bis 100 Silicium-Atomen steht,
   L für einen an ein Silicium-Atom von P gebundenen Alkylen-Rest mit 1 bis 12 C-Atomen steht, und
   Q für eine Reaktivgruppe ausgewählt aus Glycidoxy, N-Aziridinyl, 1,3-Ketoester, 1,3-Ketoamid, (Meth)acrylat und (Meth)acrylamid steht.

Als "aliphatische Amidin- Gruppe wird eine Amidin- Gruppe bezeichnet, welche kein Stickstoff-Atom enthält, welches direkt an einen aromatischen Ring gebunden oder Teil eines heteroaromatischen Ringsystems, wie zum Beispiel Imidazol oder Pyrimidin, ist.
Als "Siloxan-Rest" wird ein Rest enthaltend mindestens eine Siloxanbindung Si-O-Si bezeichnet.
Als "Polysiloxan-Rest" wird ein Siloxan-Rest enthaltend mehrere Siloxanbindungen in Folge, also Si-(O-Si)ₛ-Einheiten mit s = 2 oder mehr, bezeichnet. Der Begriff "Silangruppe" bezeichnet eine an einen organischen Rest oder an einen Polysiloxan-Rest gebundene Silylgruppe mit einer bis drei, insbesondere zwei oder drei, hydrolysierbaren Substituenten am Siliciumatom. Besonders gebräuchliche hydrolysierbare Substituenten sind Alkoxy-Reste. Diese Silangruppen werden auch als "Alkoxysilangruppen" bezeichnet. Silangruppen können auch in partiell oder vollständig hydrolysierter Form vorhanden sein. Als "Hydroxysilan", "Isocyanatosilan", "Aminosilan" bzw. "Mercaptosilan" werden Organoalkoxysilane bezeichnet, die am organischen Rest zusätzlich zur Silangruppe eine oder mehrere Hydroxyl-, Isocyanato-, Amino- bzw. Mercaptogruppen aufweisen.
Als "primäre Aminogruppe" bzw. "primärer Amin-Stickstoff" wird eine Aminogruppe bzw. deren Stickstoffatom bezeichnet, die bzw. das an einen einzigen organischen Rest gebunden ist und zwei Wasserstoffatome trägt; als "sekundäre Aminogruppe" bzw. "sekundärer Amin-Stickstoff" wird eine Aminogruppe bzw. deren Stickstoffatom bezeichnet, die bzw. das an zwei organische Reste, welche auch gemeinsam Teil eines Rings sein können, gebunden ist und ein Wasserstoffatom trägt; und als "tertiäre Aminogruppe" bzw. "tertiärer Amin-Stickstoff" wird eine Aminogruppe bzw. deren Stickstoffatom bezeichnet, die bzw. das an drei organische Reste, welche auch zu zweit oder zu dritt Teil eines oder mehrerer Ringe sein können, gebunden ist und kein Wasserstoffatom trägt.
Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.

Der Begriff "organisches Polymer" umfasst ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde und im PolymerRückgrat mehrheitlich Kohlenstoffatome aufweist, sowie Umsetzungsprodukte eines solchen Kollektivs von Makromolekülen. Polymere mit einem Polyorganosiloxan-Rückgrat (gemeinhin als "Silicone" bezeichnet) stellen keine organischen Polymere im Sinne des vorliegenden Dokuments dar.
Der Begriff "Silangruppen-haltiger Polyether" umfasst auch Silangruppen-haltige organische Polymere, welche zusätzlich zu Polyether-Einheiten auch Urethangruppen, Harnstoffgruppen oder Thiourethangruppen enthalten können. Solche Silangruppen-haltige Polyether können auch als "Silangruppen-haltige Polyurethane" bezeichnet werden.
Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.
Eine gestrichelte Linie in den Formeln in diesem Dokument stellt jeweils die Bindung zwischen einem Substituenten und dem zugehörigen Molekülrest dar. Als "Raumtemperatur" wird eine Temperatur von ca. 23 °C bezeichnet.

Die Reaktivgruppe Q des Polysiloxans der Formel (II) ist ein Elektronen-Akzeptor, während die Gruppe HZ bzw. HX des Amidins einen Elektronen-Donor darstellt. Sie lassen sich auf einfache Weise in einer nucleophilen Addition oder einer nucleophilen Substitution miteinander umsetzen, wobei eine kovalente Bindung Q'-Z bzw. Q'-X entsteht.

Die Umsetzung des Amidins der Formel HZ oder HX-A-Z mit dem Polysiloxan der Formel (II) wird bevorzugt bei einer Temperatur im Bereich von 0 bis 140 °C, insbesondere 20 bis 120 °C, durchgeführt. Die Umsetzung kann unter Einsatz eines Lösemittels oder bevorzugt lösemittelfrei erfolgen. Gegebenenfalls können Hilfsstoffe wie beispielsweise Katalysatoren, Initiatoren oder Stabilisatoren mitverwendet werden. Bevorzugt werden bei der Umsetzung keine Lösemittel oder Hilfsstoffe eingesetzt.
Bei der Umsetzung reagiert das Amidin oder Guanidin mit dem Polysiloxan der Formel (II) über dessen Reaktivgruppen Q.
Das Amidin bevorzugt ungefähr stöchiometrisch oder leicht überstöchiometrisch in Bezug auf die Reaktivgruppen Q des Poysiloxans der Formel (II) eingesetzt. Die Umsetzung wird dabei bevorzugt so geführt, dass sämtliche Reaktivgruppen Q des Polysiloxans umgesetzt werden. Das erfindungsgemässe Umsetzungsprodukt ist somit bevorzugt frei von Reaktivgruppen Q.
Das Polysiloxan der Formel (II) weist bevorzugt eine Viskosität bei 25 °C im Bereich von 1 bis 500 mPa·s, besonders bevorzugt 1 bis 250 mPa·s, insbesondere 1 bis 100 mPa·s, auf.

Das Umsetzungsprodukt kann bezüglich seiner Amidin-Gruppen auch in tautomerer Form vorliegen. Alle möglichen Tautomerformen werden als gleichwertig angesehen. Weiterhin kann es auch in protonierter Form vorliegen. Ebenfalls kann es in komplexierter Form vorliegen, insbesondere mit Kationen von Zink, Eisen oder Molybdän.

Z steht bevorzugt für 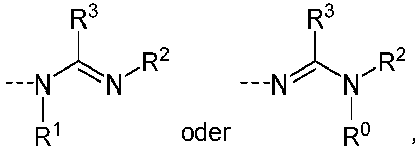 wobei
R⁰ für einen Wasserstoff-Rest oder für einen Alkyl- oder Cycloalkyl- oder Aralkyl-Rest mit 1 bis 8 C-Atomen steht,
R¹ für einen Wasserstoff-Rest oder für einen Alkyl- oder Cycloalkyl- oder Aralkyl-Rest mit 1 bis 8 C-Atomen oder zusammen mit R² für R⁶ steht,
R² für einen Wasserstoff-Rest oder für einen Alkyl-, Cycloalkyl- oder Aralkyl-Rest mit 1 bis 18 C-Atomen, welcher gegebenenfalls Ether-Sauerstoff oder tertiären Amin-Stickstoff enthält, oder zusammen mit R¹ für R⁶ steht,
R³ einen Wasserstoff-Rest oder für einen Alkyl- oder Cycloalkyl- oder Aralkyl-Rest mit 1 bis 12 C-Atomen steht,
   R⁶ für einen gegebenenfalls substituierten 1,2-Ethylen-, 1,3-Propylen- oder 1,4-Butylen-Rest mit 2 bis 12 C-Atomen steht,
   R² und R⁰ auch zusammen für einen Alkylen-Rest mit 3 bis 6 C-Atomen, welcher gegebenenfalls Ether-Sauerstoff oder tertiären Amin-Stickstoff enthält, stehen können,
   R² und R³ auch zusammen für einen Alkylen-Rest mit 3 bis 6 C-Atomen stehen können,
R¹ steht bevorzugt für einen Wasserstoff-Rest oder für einen Alkyl-Rest mit 1 bis 4 C-Atomen oder zusammen mit R² für R⁶.
R² steht bevorzugt für einen Alkyl-, Cycloalkyl- oder Aralkyl-Rest mit 1 bis 12 C-Atomen, insbesondere 1 bis 8 C-Atomen, welcher gegebenenfalls einen Ether-Sauerstoff oder tertiären Amin-Stickstoff enthält, oder zusammen mit R¹ für R⁶.

Das Amidin der Formel HZ oder HX-A-Z ist bevorzugt ausgewählt aus der Gruppe bestehend aus einem Amidin der Formel HZ, und einem Amidin der Formel. Diese Amidine sind aus gut erhältlichen Ausgangsmaterialien in einem einfachen Prozess herstellbar.

Besonders bevorzugt ist ein Amidin der Formel HZ. Es ist besonders einfach zugänglich, zeigt eine katalytische Aktivität, die wenig empfindlich ist auf Störungen durch Verunreinigungen bei der Verwendung in einer härtbaren Zusammensetzung.
Weiterhin besonders bevorzugt ist ein Guanidin der Formel HX-A-Z. Es ist besonders einfach zugänglich und zeigt eine besonders hohe katalytische Aktivität.

In einer Ausführungsform steht Z für eine aliphatische Amidin-Gruppe. In diesem Fall steht R³ für einen Wasserstoff-Rest oder für einen Alkyl- oder Cycloalkyl- oder Aralkyl-Rest mit 1 bis 12 C-Atomen.
Ein Amidin-Gruppen aufweisendes Umsetzungsprodukt weist den Vorteil auf, dass es bei der Verwendung als Katalysator eine nicht ganz so hohe katalytische Aktivität besitzt und deshalb in etwas höherer Menge eingesetzt werden kann, wodurch es weniger anfällig ist für Störungen durch andere Bestandteile einer Zusammensetzung, insbesondere den darin enthaltenen Verunreinigungen.

Für den Fall, dass Z eine Amidin-Gruppe darstellt, steht R³ bevorzugt für einen Wasserstoff-Rest oder für einen Alkyl-Rest mit 1 bis 4 C-Atomen, besonders bevorzugt für einen Wasserstoff-Rest oder Methyl-Rest.

Für den Fall, dass Z eine Amidin-Gruppe darstellt, steht R¹ bevorzugt für einen Alkyl-Rest mit 1 bis 4 C-Atomen oder zusammen mit R² für R⁶.
Besonders bevorzugt stehen R¹ und R² zusammen für R⁶.

Z stellt somit besonders bevorzugt eine Amidin-Gruppe der Formel 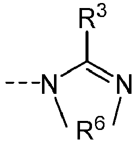 dar. Ein solches Umsetzungsprodukt ist besonders einfach herstellbar.
R⁶ weist bevorzugt 2 bis 6 C-Atome auf.
R⁶ steht bevorzugt für 1,2-Ethylen, 1,2-Propylen, 1,3-Propylen, 2-Methyl-1,2-propylen, 2,2-Dimethyl-1,3-propylen, 1,3-Butylen, 1,4-Butylen, 1,3-Pentylen, 1,2-Cyclohexylen, 1,3-Cyclohexylen oder 2(4)-Methyl-1,3-cyclohexylen, insbesondere für 1,2-Ethylen, 1,2-Propylen, 1,3-Propylen, 2-Methyl-1,2-propylen, 2,2-Dimethyl-1,3-propylen, 1,3-Butylen oder 1,3-Pentylen, besonders bevorzugt für 1,2-Ethylen oder 1,3-Propylen, am meisten bevorzugt für 1,3-Propylen.
Meist bevorzugt stehen R³ für Methyl und R⁶ für 1,3-Propylen. Ein solches Amidin weist eine besonders hohe katalytische Aktivität auf und ist besonders einfach herstellbar.

A steht bevorzugt für einen zweiwertigen Kohlenwasserstoff-Rest mit 2 bis 20 C-Atomen, welcher gegebenenfalls Ether-Sauerstoff oder sekundären oder tertiären Amin-Stickstoff enthält.
Besonders bevorzugt ist A entweder ausgewählt aus der Gruppe bestehend aus 1,2-Ethylen, 1,2-Propylen, 1,3-Propylen, 1,3-Pentylen, 2-Methyl-1,5-pentylen, 1,6-Hexylen, 2,2(4),4-Trimethyl-1,6-hexamethylen, 1,8-Octylen,1,12-Dodecylen, (1,5,5-Trimethylcyclohexan-1-yl)methan-1,3, 1,3-Cyclohexylen-bis(methylen), 1,4-Cyclohexylen-bis(methylen), 1,3-Phenylen-bis(methylen), 2(4)-Methyl-1,3-cyclohexylen, N-Methyl-4-aza-1,7-heptylen, 3-Oxa-1,5-pentylen, 3,6-Dioxa-1,8-octylen, 4,7-Dioxa-1,10-decylen und einem Polyoxypropylen-Rest mit einem mittleren Molekulargewicht im Bereich von etwa 200 bis 250 g/mol, oder A steht zusammen mit R⁷ einschliesslich des Stickstoffatoms von X für einen Rest ausgewählt aus der Gruppe bestehend aus Piperidin-4-ylmethyl, 2-(Piperidin-4-yl)ethyl und 2-Piperazinoethyl.

Für den Fall, dass A zusammen mit R⁷ einschliesslich des Stickstoffatoms von X für Piperidin-4-ylmethyl bzw. 2-(Piperidin-4-yl)ethyl bzw. 2-Piperazinoethyl steht, weist das Amidin oder Guanidin der Formel HX-A-Z die Formel 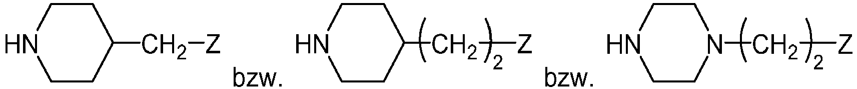 auf.
X steht bevorzugt für NR⁷.
R⁷ steht bevorzugt für einen Wasserstoff-Rest.
R⁷ steht weiterhin bevorzugt für einen Alkyl- oder Cycloalkyl-Rest mit 1 bis 8 C-Atomen.
R⁷ steht weiterhin bevorzugt für einen Rest der Formel ---R⁸-Z, wobei R⁸ für einen gegebenenfalls verzweigten Alkylen-Rest mit 2 bis 6 C-Atomen, insbesondere für 1,2-Ethylen, 1,3-Propylen oder 1,6-Hexylen, steht und Z die genannten Bedeutungen aufweist.
R⁷ steht weiterhin bevorzugt für einen N,N-Dimethylaminopropyl-Rest.
R⁷ steht weiterhin bevorzugt zusammen mit A und unter Einbezug des Stickstoffatoms von X für Piperidin-4-ylmethyl oder 2-(Piperidin-4-yl)ethyl oder 2-Piperazinoethyl.

Bevorzugt steht q für 2.

P steht bevorzugt für einen q-wertigen Polysiloxan-Rest mit 3 bis 50, insbesondere 4 bis 25, Silicium-Atomen. Ein solches Umsetzungsprodukt weist eine besonders hohe katalytische Aktivität auf.

P weist bevorzugt ein mittleres Molekulargewicht im Bereich von 200 bis 4'000 g/mol, insbesondere 280 bis 2'000 g/mol, auf.

Besonders bevorzugt steht P für einen zweiwertigen Polysiloxan-Rest der Formel (IVa) oder für einen einwertigen Polysiloxanrest der Formel (IVb), 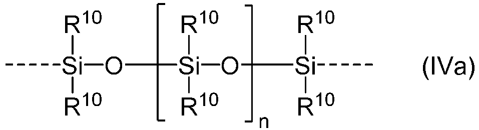 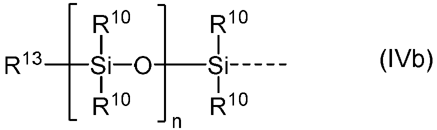 wobei
R¹⁰ unabhängig voneinander für einen einwertigen Kohlenwasserstoff-Rest mit 1 bis 12, insbesondere 1 bis 6, C-Atomen, bevorzugt für Methyl oder Phenyl, insbesondere für Methyl, steht,
R¹³ für einen Hydroxyl-Rest oder für einen einwertigen Kohlenwasserstoff-Rest mit 1 bis 12 C-Atomen, bevorzugt für Methyl, steht, und
n für eine ganze Zahl von 1 bis 48, insbesondere 2 bis 23, steht.

Am meisten bevorzugt steht P für einen zweiwertigen Polysiloxan-Rest der Formel (IVa). Ein solches Umsetzungsprodukt weist eine besonders hohe katalytische Aktivität auf.

L steht bevorzugt für einen Alkylen-Rest mit 1 bis 8, bevorzugt 1 bis 6, C-Atomen, besonders bevorzugt für 1,3-Propylen.

Q steht für eine Reaktivgruppe ausgewählt aus Glycidoxy, N-Aziridinyl, 1,3-Ketoester, 1,3-Ketoamid, (Meth)acrylat und (Meth)acrylamid.

Glycidoxy steht dabei für eine Reaktivgruppe der Formel 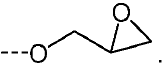 N-Aziridinyl steht insbesondere für eine Reaktivgruppe der Formel 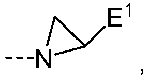 wobei E¹ für einen Wasserstoff-Rest oder Methyl-Rest steht.
1,3-Ketoester oder 1,3-Ketoamid stehen insbesondere für eine Reaktivgruppe der Formel 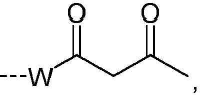 wobei W für O oder NR¹⁴ steht und R¹⁴ für einen Wasserstoff-Rest oder für einen einwertigen Kohlenwasserstoff-Rest mit 1 bis 8 C-Atomen steht.
(Meth)acrylat oder (Meth)acrylamid stehen insbesondere für eine Reaktivgruppe der Formel 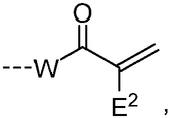 wobei E² für einen Wasserstoff-Rest oder Methyl-Rest steht und W die bereits genannten Bedeutungen aufweist. Bevorzugt steht W für O.
Q steht bevorzugt für Glycidoxy, (Meth)acrylat oder (Meth)acrylamid, insbesondere für Glycidoxy oder (Meth)acrylat.
Besonders bevorzugt ist ein Umsetzungsprodukt erhalten aus der Umsetzung von mindestens einem Amidin der Formel HZ mit mindestens einem Polysiloxan der Formel (II), bei welchem Q für Glycidoxy steht.
Besonders bevorzugt ist weiterhin ein Umsetzungsprodukt erhalten aus der Umsetzung von mindestens einem Amidin der Formel HZ mit mindestens einem Polysiloxan der Formel (II), bei welchem Q für (Meth)acrylat steht. Weiterhin besonders bevorzugt ist ein Umsetzungsprodukt erhalten aus der Umsetzung von mindestens einem Amidin der Formel HX-A-Z, mit mindestens einem Polysiloxan der Formel (II), bei welchem Q für Glycidoxy steht.

Weiterhin besonders bevorzugt ist ein Umsetzungsprodukt erhalten aus der Umsetzung von mindestens einem Amidin der Formel HX-A-Z, mit mindestens einem Polysiloxan der Formel (II), bei welchem Q für (Meth)acrylat, steht.

Die bevorzugten Umsetzungsprodukte sind aus gut zugänglichen Ausgangsstoffen besonders einfach erhältlich und/oder weisen eine besonders hohe katalytische Aktivität auf.

Das erfindungsgemässe Umsetzungsprodukt enthält insbesondere Verbindungen der Formel (I), 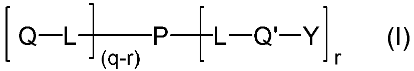 wobei
Y für Z oder für ---X-A-Z steht,
Q' für eine zweiwertige Verbindungseinheit entstanden aus der Reaktion einer Reaktivgruppe Q mit HY steht,
r für 1 oder 2 steht, wobei (q-r) für 0 oder 1 steht,
und q, Q, L, P, X, A und Z die bereits genannten Bedeutungen aufweisen.
Ein weiterer Gegenstand der Erfindung ist somit eine Verbindung der Formel (I).
Bevorzugt steht (q-r) für 0. Die Verbindung der Formel (I) ist also bevorzugt frei von Reaktivgruppen Q.

Q' ist bevorzugt ausgewählt aus der Gruppe bestehend aus 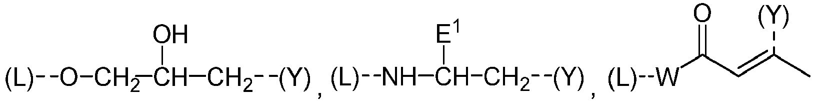 und 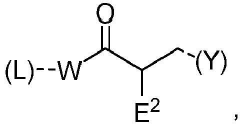 wobei W, E¹ und E² die bereits genannten Bedeutungen aufweisen.

Die in Klammern stehenden Buchstaben (L) und (Y) stellen dabei jeweils die Anbindung von Q' an L und Y dar.

Für den Fall, dass Q' für 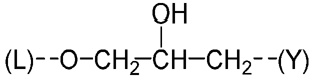 steht, ist Q' entstanden aus der Reaktion eines Amidins der Formel HZ oder HX-A-Z mit einer Glycidoxy-Gruppe.

Für den Fall, dass Q' für 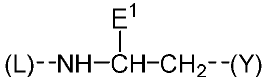 steht, ist Q' entstanden aus der Reaktion eines Amidins der Formel HZ oder HX-A-Z mit einer N-Aziridinyl-Gruppe.

Für den Fall, dass Q' für 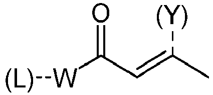 steht, ist Q' entstanden aus der Reaktion eines Amidins der Formel HX-A-Z mit einer 1,3-Ketoester- oder 1,3-Ketoamid-Gruppe, wobei X für NH steht.

Für den Fall, dass Q' für 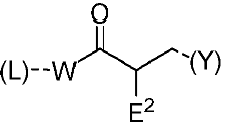 steht, ist Q' entstanden aus der Reaktion eines Amidins der Formel HZ oder HX-A-Z mit einer (Meth)acrylat- oder (Meth)acrylamid-Gruppe.

Besonders bevorzugt steht Q' für 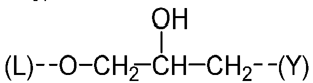 oder

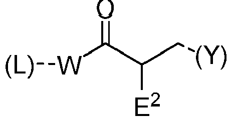

Besonders bevorzugte Verbindungen der Formel (I) weisen die folgenden Formeln (la) bis (If) auf.

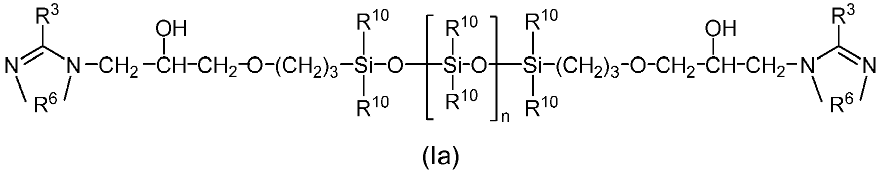

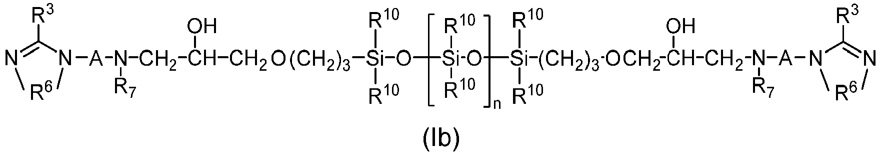

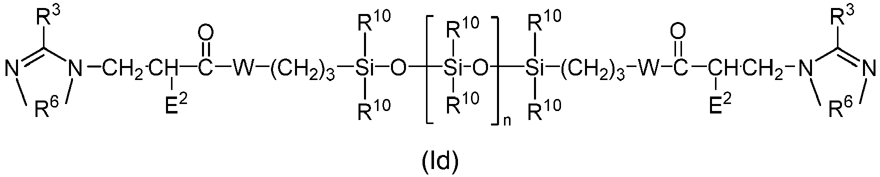

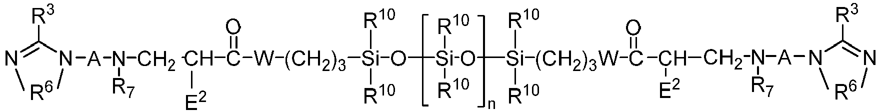

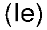

Die Verbindung der Formel (la) ist entstanden durch die Umsetzung eines Amidins der Formel 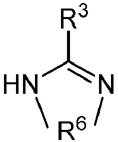 mit einem Polysiloxan der Formel

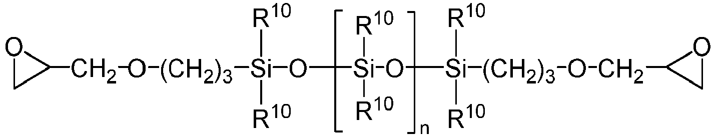

Die Verbindung der Formel (Ib) ist entstanden durch die Umsetzung eines Amidins der Formel 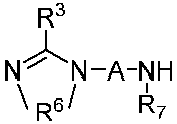 mit einem Polysiloxan der Formel

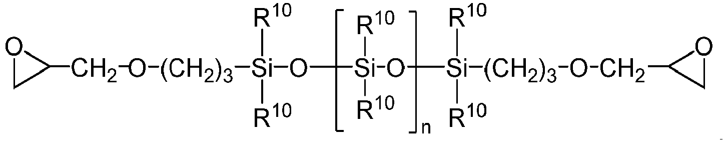

Die Verbindung der Formel (Id) ist entstanden durch die Umsetzung eines Amidins der Formel 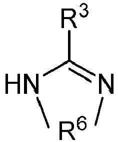 mit einem Polysiloxan der Formel

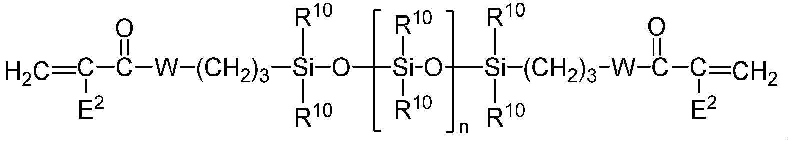

Die Verbindung der Formel (Ie) ist entstanden durch die Umsetzung eines Amidins der Formel 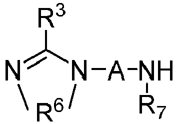 mit einem Polysiloxan der Formel

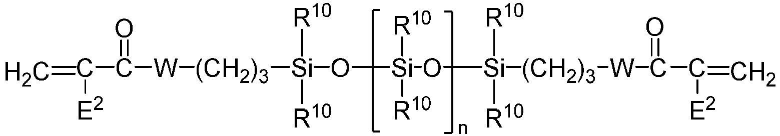

Ein besonders geeignetes Amidin oder Guanidin der Formel HZ oder HX-A-Z ist ein Amidin der Formel (IIIa), 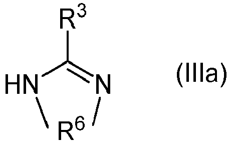 wobei R³ insbesondere für einen Wasserstoff-Rest oder Methyl-Rest steht und R⁶ die bereits genannten Bedeutungen aufweist.

Bevorzugt ist das Amidin der Formel (IIIa) ausgewählt aus der Gruppe bestehend aus Imidazolin, 2-Methylimidazolin, 4(5)-Methylimidazolin, 2,4(5)-Dimethylimidazolin, 4,4(5,5)-Dimethylimidazolin, 2,4,4(2,5,5)-Trimethylimidazolin, 1,4,5,6-Tetrahydropyrimidin, 2-Methyl-1,4,5,6-tetrahydropyrimidin, 5,5-Dimethyl-1,4,5,6-tetrahydropyrimidin, 2,5,5-Trimethyl-1,4,5,6-tetrahydropyrimidin, 4(6)-Methyl-1,4,5,6-tetrahydropyrimidin, 2,4(2,6)-Dimethyl-1,4,5,6-tetrahydropyrimidin, 4(6)-Ethyl-1,4,5,6-tetrahydropyrimidin und 4(6)-Ethyl-2-methyl-1,4,5,6-tetrahydropyrimidin.
Davon bevorzugt ist 2-Methyl-1,4,5,6-tetrahydropyrimidin.

Ein besonders geeignetes Amidin der Formel HZ oder HX-A-Z ist weiterhin ein Amidin der Formel (IIIb), 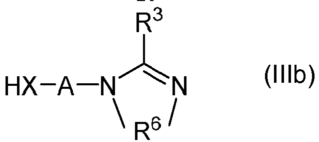 wobei R³ insbesondere für einen Wasserstoff-Rest oder Methyl-Rest steht und R⁶, A und X die bereits genannten Bedeutungen aufweisen.
Bevorzugt ist das Amidin der Formel (IIIb) ausgewählt aus der Gruppe bestehend aus 1-(2-Aminoethyl) imidazolin, 1-(2-Aminoethyl)-2-methyl-imidazolin, 1-(3-Aminopropyl) imidazolin, 1-(3-Aminopropyl)-2-methyl-imidazolin, 1-(2-Aminoethyl)-1,4,5,6-tetrahydropyrimidin, 1-(2-Aminoethyl)-2-methyl-1,4,5,6-tetrahydropyrimidin, 1-(3-Aminopropyl)-1,4,5,6-tetrahydropyrimidin, 1-(3-Aminopropyl)-2-methyl-1,4,5,6-tetrahydropyrimidin und Bis(2-(2-methyl-4,5-dihydro-1H-imidazol-1-yl)ethyl)amin.
Davon bevorzugt ist 1-(2-Aminoethyl)-2-methyl-1,4,5,6-tetrahydropyrimidin oder 1-(3-Aminopropyl)-2-methyl-1,4,5,6-tetrahydropyrimidin.

Das Amidin der Formel HZ oder HX-A-Z wird insbesondere erhalten aus der Umsetzung von mindestens einem primären Amin mit mindestens einem Reagens zur Einführung von Amidin- Gruppen.

Ein Amidin der Formel (IIIa) wird insbesondere erhalten aus der Umsetzung von mindestens einem primären Amin der Formel NH₂-R⁶-NH₂ mit mindestens einem Reagens zur Einführung von Amidin-Gruppen.
Ein Amidin der Formel (IIIb) wird insbesondere erhalten aus der Umsetzung von mindestens einem primären Amin der Formel HX-A-NH-R⁶-NH₂ mit mindestens einem Reagens zur Einführung von Amidin-Gruppen.

Als primäres Amin geeignet sind insbesondere
- aliphatische primäre Mercaptoamine, insbesondere 2-Aminoethanthiol (Cysteamin), 3-Aminopropanthiol, 4-Amino-1-butanthiol, 6-Amino-1-hexanthiol, 8-Amino-1-octanthiol, 10-Amino-1-decanthiol oder 12-Amino-1-dodecanthiol;
- aliphatische, cycloaliphatische oder arylaliphatische primäre Diamine, insbesondere Ethylendiamin, 1,2- und 1,3-Propandiamin, 2-Methyl-1,2-propandiamin, 2,2-Dimethyl-1,3-propandiamin, 1,3-und 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPD), 2- und/oder 4-Methyl-1,3-diaminocyclohexan, 1,3- oder 1,4-Bis-(aminomethyl)cyclohexan, 2,5(2,6)-Bis(aminomethyl)bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol, 1,4-Bis(aminomethyl)benzol, 4-Aminomethyl-1,8-octandiamin, oder Produkte aus der doppelten Cyanoethylierung und nachfolgenden Reduktion von Fettaminen, welche abgeleitet sind von natürlichen Fettsäuren, wie N,N-Bis(3-aminopropyl)dodecylamin oder N,N-Bis(3-aminopropyl)talgalkylamin, erhältlich als Triameen® Y12D oder Triameen® YT (von Akzo Nobel);
- Ethergruppenhaltige aliphatische oder cycloaliphatische primäre Diamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin, cycloaliphatische ethergruppenhaltige Diamine aus der Propoxylierung und nachfolgenden Aminierung von 1,4-Dimethylolcyclohexan, erhältlich insbesondere als Jeffamine® RFD-270 (von Huntsman), Polyoxyalkylenamine mit einem mittleren Molekulargewicht im Bereich von 200 bis 500 g/mol, wie sie im Handel beispielsweise unter den Handelsnamen Jeffamine® (von Huntsman), Polyetheramine (von BASF) und PC Amine® (von Nitroil) erhältlich sind, dadurch gekennzeichnet, dass sie 2-Aminopropyl- oder 2-Aminobutyl-Endgruppen tragen, insbesondere Jeffamine® D-230, Jeffamine® D-400, Jeffamine® XTJ-582, Jeffamine® HK-511 oder Jeffamine® XTJ-566 (alle von Huntsman), oder dazu analoge Typen von BASF und Nitroil;
- Diamine mit einer primären und einer sekundären Aminogruppe, insbesondere N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethylpiperidin, 4-((2-Amino)ethyl)piperidin, N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, 3-Methylamino-1-pentylamin, 3-Ethylamino-1-pentylamin, 3-Butylamino-1-pentylamin, 3-Hexylamino-1-pentylamin, 3-(2-Ethylhexyl)amino-1-pentylamin, 3-Dodecylamino-1 -pentylamin, 3-Cyclohexylamino-1 -pentylamin oder 3-aminopropylierte Fettamine wie insbesondere N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, wie sie beispielsweise unter dem Handelsnamen Duomeen® (von Akzo Nobel) erhältlich sind;
- Polyalkylenamine und weitere Polyamine mit primären Aminogruppen und sekundären und/oder tertiären Aminogruppen, insbesondere Diethylentriamin (DETA), Triethylentetramin (TETA), Tetraethylenpentamin (TEPA), Pentaethylenhexamin (PEHA), Polyethylenpolyamin mit 5 bis 7 Ethylenamin-Einheiten (sogenanntes "higher ethylenepolyamine", HEPA), Dipropylentriamin (DPTA), N-(2-Aminoethyl)-1,3-propandiamin (N3-Amin), N,N'-Bis-(3-aminopropyl)ethylendiamin (N4-Amin), Bis-hexamethylentriamin (BHMT), N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin, N-(2-Aminoethyl)piperazin, N-(2-Aminopropyl)piperazin, N¹-((3-Dimethylamino)-propyl)-1,3-diaminopropan, N-Methyl-N'-(2-aminoethyl)-1,2-ethandiamin, N-Methyl-N'-(3-aminopropyl)-1,2-ethandiamin, N-Methyl-N'-(2-aminoethyl)-1,3-propandiamin oder N-Methyl-N'-(3-aminopropyl)-1,3-propandiamin.

Bevorzugt ist das primäre Amin ausgewählt aus der Gruppe bestehend aus Ethylendiamin, 1,2-Propandiamin, 1,3-Propandiamin, 2-Methyl-1,2-propandiamin, 2,2-Dimethyl-1,3-propandiamin, N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Cyclohexyl-1,3-propandiamin, 1,3-Butandiamin, 1,3-Pentandiamin (DAMP), 1,5-Diamino-2-methylpentan (MPMD), 1,6-Hexandiamin, 2,2(4),4-Trimethylhexamethylendiamin (TMD), 1,8-Octandiamin, 1,12-Dodecandiamin, 1-Amino-3-aminomethyl-3,5,5-trimethylcyclohexan (IPD), 1,3-Bis(aminomethyl)cyclohexan, 1,4-Bis(aminomethyl)cyclohexan, 1,3-Bis(aminomethyl)benzol, 2(4)-Methyl-1,3-diaminocyclohexan, Diethylentriamin, Tetraethylenpentamin, Dipropylentriamin, N-(2-Aminoethyl)-1,3-propandiamin (N3-Amin), Bis(hexamethylen)triamin (BHMT), 4-Aminomethylpiperidin, 4-((2-Amino)ethyl)piperidin, N-(2-Aminoethyl)piperazin, N'-Methyl-N'-(3-aminopropyl)-1,3-propandiamin, N¹-((3-Dimethylamino)propyl)-1,3-diaminopropan, Bis-(2-aminoethyl)ether, 3,6-Dioxaoctan-1,8-diamin, 4,7-Dioxadecan-1,10-diamin und Polyoxypropylendiaminen mit einem mittleren Molekulargewicht im Bereich von etwa 220 bis 250 g/mol wie insbesondere Jeffamine® D-230.

Als Reagens zur Einführung von Amidin-Gruppen geeignet sind insbesondere Orthoester, 1,3-Ketoester, 1,3-Ketoamide, Nitrile, Imidsäureester, Imidsäurechloride, Amide oder Lactame.
Besonders geeignet sind Orthoester, 1,3-Ketoester oder Nitrile, insbesondere Trimethylorthoformiat, Triethylorthoformiat, Trimethylorthoacetat, Triethylorthoacetat, Methylacetoacetat, Ethylacetoacetat, Isopropylacetoacetat, tert.Butyl-acetoacetat oder Acetonitril.
Die Umsetzung zum Amidin wird bevorzugt bei erhöhter Temperatur, gegebenenfalls unter erhöhtem Druck und gegebenenfalls in Gegenwart eines Katalysators, durchgeführt, wobei aus dem Reagens freigesetzte Abspalter wie Alkohole, Ester oder Amine während oder nach der Umsetzung bevorzugt entfernt werden, insbesondere mittels Destillation, gegebenenfalls unter Vakuum. Bevorzugt wird das Reagens bei der Umsetzung vollständig umgesetzt.

Ein für die Umsetzung geeignetes Polysiloxan der Formel (II) ist insbesondere ein kommerziell erhältliches Polysiloxan mit Reaktivgruppen Q. Bevorzugt sind Glycidoxy-funktionelle Silikonöle, wie insbesondere Tegomer® E-Si 2330 (von Evonik) oder X-22-163, X-22-163A oder LF-105 (alle von Shin Etsu) oder Silmer® EP Di-25 (von Siltech), oder Methacrylat-funktionelle Silikonöle, wie insbesondere Silaplan® FM-7711 (von Chisso) oder X-22-164, X-22-164A oder X-22-164AS (alle von Shin Etsu).

Ein weiteres geeignetes Polysiloxan der Formel (II) ist insbesondere ein Polysiloxan erhalten aus der Umsetzung von einem Hydroxyalkyl- oder Aminoalkylfunktionellen Polysiloxan der Formel P-[-L-OH]_{q} oder P-[-L-NH₂]_{q}, bei welchen P, L und q die bereits genannten Bedeutungen aufweisen, mit einem Acetoacetat, wobei unter Freisetzung eines Alkohols ein Polysiloxan der Formel (II) mit 1,3-Ketoester- oder 1,3-Ketoamid als Reaktivgruppen Q erhalten wird.

Ein weiteres geeignetes Polysiloxan der Formel (II) ist insbesondere ein Polysiloxan erhalten aus der Umsetzung von einem Siloxan oder Polysiloxan der Formel (V),

P¹-[-OH]_{q} (V)

wobei P¹ für einen q-wertigen Siloxan- oder Polysiloxan-Rest mit 2 bis 98 Silicium-Atomen steht und q die bereits genannten Bedeutungen aufweist,
mit einem Q-funktionellen Silan der Formel (VI), 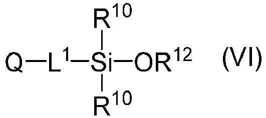 wobei
L¹ für einen Alkylen-Rest mit 1 bis 12 C-Atomen steht,
R¹² für einen Alkyl-Rest mit 1 bis 12, insbesondere 1 bis 6, C-Atomen, der gegebenenfalls Ether-Sauerstoff aufweist, bevorzugt für Methyl oder Ethyl oder Isopropyl, insbesondere für Methyl oder Ethyl, steht,
und Q und R¹⁰ die bereits genannten Bedeutungen aufweisen,
unter Freisetzung von Alkohol HOR¹².

Dabei steht Q insbesondere für Glycidoxy oder (Meth)acrylat.
L¹ steht bevorzugt für einen Alkylen-Rest mit 1 bis 8, bevorzugt 1 bis 6, C-Atomen, insbesondere für 1,3-Propylen.
P¹ weist bevorzugt 2 bis 48, insbesondere 2 bis 23, Silicium-Atome auf.

Besonders bevorzugt weist das Siloxan oder Polysiloxan der Formel (V) die Formel 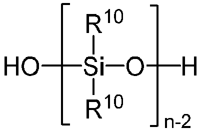 auf, wobei n und R¹⁰ die bereits genannten Bedeutungen aufweisen.

Diese Umsetzung wird bevorzugt bei einer Temperatur im Bereich von 0 bis 140 °C, insbesondere 20 bis 120 °C, durchgeführt, wobei der freigesetzte Alkohol HOR¹² bevorzugt aus der Reaktionsmischung entfernt wird, insbesondere mittels Destillation unter Vakuum.
Das Silan der Formel (VI) wird bevorzugt ungefähr stöchiometrisch oder leicht überstöchiometrisch in Bezug auf die OH-Gruppen des Siloxans oder Polysiloxans der Formel (V) eingesetzt.

Als Silan der Formel (VI) geeignet ist insbesondere 3-Glycidoxypropyl-methoxydimethylsilan, 3-Glycidoxypropyl-ethoxydimethylsilan, 3-Acryloxypropyl-methoxydimethylsilan, 3-Acryloxypropyl-ethoxydimethylsilan, 3-Methacryloxypropyl-methoxydimethylsilan oder 3-Methacryloxypropyl-ethoxydimethylsilan.

Geeignete Siloxane oder Polysiloxane der Formel (V) sind kommerziell erhältlich, beispielsweise als X-21-5841 (von Shin Etsu) oder Silaplan® FM-4411 (von Chisso).

Umsetzungsprodukte enthaltend Verbindungen der Formel (I) sind auch erhältlich, indem zuerst mindestens ein Amidin oder Guanidin der Formel HZ oder HX-A-Z mit dem Q-funktionellen Silan der Formel (VI) zu einem Y-funktionellen Silan der Formel (VII) umgesetzt wird, 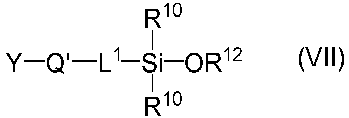 und dieses anschliessend mit mindestens einem Polysiloxan der Formel (V) unter Freisetzung von Alkohol HOR¹² umgesetzt wird.

Das erfindungsgemässe Umsetzungsprodukt kann neben Verbindungen der Formel (I) Anteile von Nebenprodukten oder nicht umgesetzten Ausgangsstoffen enthalten. Es kann nach der Umsetzung weiter aufgearbeitet werden oder bevorzugt ohne Aufarbeitung oder Reinigung eingesetzt werden.

Ein weiterer Gegenstand der Erfindung ist die Verwendung des erfindungsgemässen Umsetzungsprodukts als Katalysator für die Vernetzung einer härtbaren Zusammensetzung. Dabei beschleunigt es die Vernetzung bzw. Aushärtung der Zusammensetzung.

Als härtbare Zusammensetzung geeignet ist insbesondere
- eine Epoxidharz-Zusammensetzung, insbesondere ein heisshärtendes, über Dicyandiamid oder Carbonsäuren oder Carbonsäureanhydride vernetzendes System, wie es beispielsweise in Klebstoffen, Beschichtungen oder Giessharzen eingesetzt wird; oder
- eine Polyurethan-Zusammensetzung, insbesondere ein zweikomponentiges, durch Reaktion von Polyolen mit Isocyanaten vernetzendes System, wie es beispielsweise für Klebstoffe, Beläge, Vergussmassen, Dichtfugen, Formkörper oder Blockschäume eingesetzt wird, oder ein einkomponentiges System mit blockierten Isocyanatgruppen oder blockierten Aminogruppen, wie es beispielsweise in Pulverlacken, Coil Coatings, Elektrotauchlacken oder Flüssiglacken eingesetzt wird; oder
- eine Epoxidharz-Polyurethan-Zusammensetzung; oder
- eine Cyanatesterharz-Zusammensetzung; oder
- eine Silangruppen-haltige Zusammensetzung.

Besonders vorteilhaft ist die Verwendung zur Vernetzung einer Silangruppen-haltigen Zusammensetzung, insbesondere einer Zusammensetzung auf Basis von Silangruppen-haltigen Polymeren. Zusammensetzungen auf Basis von Silangruppen-haltigen Polymeren härten auch bei relativ geringem Gehalt des erfindungsgemässen Umsetzungsprodukts rasch aus und neigen nicht zu migrationsbedingten Fehlern wie Separation, Ausschwitzen oder Substratverschmutzung.

Besonders bevorzugt ist die Verwendung des erfindungsgemässen Umsetzungsprodukts als Katalysator für die Vernetzung einer Zusammensetzung auf Basis von Silangruppen-haltigen Polymeren, insbesondere ausgewählt aus der Gruppe bestehend aus Polyorganosiloxanen mit endständigen Silangruppen und Silangruppen-haltigen organischen Polymeren, wie sie im Folgenden genauer beschrieben werden.
Ein Polyorganosiloxan mit endständigen Silangruppen weist den Vorteil auf, dass es besonders wasser- und lichtbeständig ist und besonders weichelastische Eigenschaften ermöglicht.
Ein Silangruppen-haltiges organisches Polymer weist den Vorteil auf, dass es besonders gute Haftungseigenschaften auf einer Vielzahl von Untergründen aufweist und besonders kostengünstig ist.

Besonders bevorzugt ist das Silangruppen-haltige Polymer ein Polyorganosiloxan mit endständigen Silangruppen. Das erfindungsgemässe Umsetzungsprodukt weist eine ganz besonders gute Verträglichkeit mit einer solchen Zusammensetzung auf.

Ein weiterer Gegenstand der Erfindung ist somit eine Zusammensetzung enthaltend mindestens ein Silangruppen-haltiges Polymer und mindestens ein Umsetzungsprodukt wie vorgängig beschrieben.

Eine solche Zusammensetzung verfügt über eine gute Lagerfähigkeit ohne Separationsneigung, erlaubt aufgrund der geringen Toxizität und geringen Flüchtigkeit des erfindungsgemässen Umsetzungsprodukts eine niedrige Gefahreneinstufung und ermöglicht emissions- und geruchsarme Produkte, welche überraschend schnell aushärten und dabei ein mechanisch hochwertiges und beständiges Material bilden. Besonders vorteilhaft ist dabei der Umstand, dass dieses Material kaum zu migrationsbedingten Fehlern wie Ausschwitzen oder Substratverschmutzung neigt. Im Gegensatz dazu neigen Zusammensetzungen enthaltend Amidin- oder Guanidin-Katalysatoren nach dem Stand der Technik, wie beispielsweise DBU oder TMG, zu Migrationseffekten, was sich vor der Aushärtung durch Separation und nach der Aushärtung durch klebrige und/oder schmierige Oberflächen und/oder Substratverschmutzungen äussern kann. Besonders letztere Effekte sind äusserst unerwünscht, da klebrige und schmierige Oberflächen schnell verschmutzen und schlecht überstreichbar sind, und Substratverschmutzungen zu bleibenden Verfärbungen führen können.

Das Silangruppen-haltige Polymer ist in einer besonders bevorzugten Ausführungsform ein Polyorganosiloxan mit endständigen Silangruppen.
Ein bevorzugtes Polyorganosiloxan mit endständigen Silangruppen weist die Formel (VIII) auf, 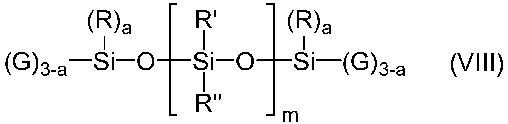 wobei
R, R' und R" unabhängig voneinander jeweils für einen einwertigen Kohlenwasserstoff-Rest mit 1 bis 12 C-Atomen stehen;
G für einen Hydroxyl-Rest oder für einen Alkoxy-, Acetoxy-, Ketoximato-, Amido- oder Enoxy-Rest mit 1 bis 13 C-Atomen steht;
a für 0, 1 oder 2 steht; und
m für eine ganze Zahl im Bereich von 50 bis etwa 2'500 steht.

R steht bevorzugt für Methyl, Vinyl oder Phenyl.
R' und R" stehen bevorzugt unabhängig voneinander jeweils für einen Alkylrest mit 1 bis 5, bevorzugt 1 bis 3 C-Atomen, insbesondere für Methyl.
G steht bevorzugt für einen Hydroxyl-Rest oder für einen Alkoxy- oder Ketoximato-Rest mit 1 bis 6 C-Atomen, insbesondere für einen Hydroxyl-, Methoxy-, Ethoxy-, Methylethylketoximato- oder Methylisobutylketoximato-Rest. Besonders bevorzugt steht G für einen Hydroxylrest.
a steht bevorzugt für 0 oder 1, insbesondere für 0.
Weiterhin ist m bevorzugt so gewählt, dass das Polyorganosiloxan der Formel (VIII) bei Raumtemperatur eine Viskosität im Bereich von 100 bis 500'000 mPa·s, insbesondere von 1000 bis 100'000 mPa·s, aufweist.

Polyorganosiloxane der Formel (VIII) sind gut handhabbar und vernetzen mit Feuchtigkeit und/oder Silanvernetzern zu festen Silicon-Polymeren mit elastischen Eigenschaften.
Geeignete kommerziell erhältliche Polyorganosiloxane der Formel (VIII) sind beispielsweise erhältlich von Wacker, Momentive Performance Material, GE Advanced Materials, Dow Corning, Bayer oder Shin Etsu.

Bevorzugt enthält die Zusammensetzung zusätzlich zum Polyorganosiloxan mit endständigen Silangruppen einen Silanvernetzer, insbesondere ein Silan der Formel (IX),

(R''')ₚ-Si-(G')₄₋ₚ (IX)

wobei
R''' für einen einwertigen Kohlenwasserstoff-Rest mit 1 bis 12 C-Atomen steht, G' für einen Hydroxyl-Rest oder für einen Alkoxy-, Acetoxy-, Ketoximato-, Amido- oder Enoxy-Rest mit 1 bis 13 C-Atomen steht; und
p für einen Wert von 0, 1 oder 2, insbesondere für 0 oder 1, steht.

Besonders geeignete Silane der Formel (IX) sind Methyltrimethoxysilan, Ethyltrimethoxysilan, Propytrimethoxysilan, Vinyltrimethoxysilan, Methyltriethoxysilan, Vinyltriethoxysilan, Phenyltriethoxysilan, Tetramethoxysilan, Tetraethoxysilan, Methyltris(methylethylketoximo)silan, Vinyltris(methylethylketoximo)silan und Methyltris(isobutylketoximo)silan.

Das Silangruppen-haltige Polymer ist in einer weiteren bevorzugten Ausführungsform ein Silangruppen-haltiges organisches Polymer, insbesondere ein Polyolefin, Polyester, Polyamid, Poly(meth)acrylat oder Polyether oder eine Mischform dieser Polymere, welches jeweils eine oder bevorzugt mehrere Silangruppen trägt. Die Silangruppen können seitlich in der Kette oder endständig stehen und sind über ein C-Atom an das organische Polymer gebunden. Besonders bevorzugt ist das Silangruppen-haltige organische Polymer ein Silangruppen-haltiges Polyolefin oder ein Silangruppen-haltiger Polyester oder ein Silangruppen-haltiges Poly(meth)acrylat oder ein Silangruppen-haltiger Polyether oder eine Mischform dieser Polymere.
Am meisten bevorzugt ist das Silangruppen-haltige organische Polymer ein Silangruppen-haltiger Polyether.

Das Silangruppen-haltige organische Polymer weist als Silangruppen bevorzugt Alkoxysilangruppen auf, insbesondere Alkoxysilangruppen der Formel (X), 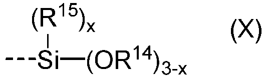 wobei
R¹⁴ für einen linearen oder verzweigten, einwertigen Kohlenwasserstoffrest mit 1 bis 5 C-Atomen, insbesondere für Methyl oder für Ethyl oder für Isopropyl, steht;
R¹⁵ für einen linearen oder verzweigten, einwertigen Kohlenwasserstoffrest mit 1 bis 8 C-Atomen, insbesondere für Methyl oder für Ethyl, steht; und
x für einen Wert von 0 oder 1 oder 2, bevorzugt für 0 oder 1, insbesondere für 0, steht.
Besonders bevorzugt steht R¹⁴ für Methyl oder für Ethyl.
Für bestimmte Anwendungen steht der Rest R¹⁴ bevorzugt für eine Ethylgruppe, da in diesem Fall bei der Aushärtung der Zusammensetzung ökologisch und toxikologisch harmloses Ethanol freigesetzt wird.
Besonders bevorzugt sind Trimethoxysilangruppen, Dimethoxymethylsilangruppen oder Triethoxysilangruppen.
Dabei weisen Methoxysilangruppen den Vorteil auf, dass sie besonders reaktiv sind, und Ethoxysilangruppen weisen den Vorteil auf, dass sie toxikologisch vorteilhaft und besonders lagerstabil sind.

Das Silangruppen-haltige organische Polymer weist im Mittel bevorzugt 1.3 bis 4, insbesondere 1.5 bis 3, besonders bevorzugt 1.7 bis 2.8, Silangruppen pro Molekül auf. Die Silangruppen sind bevorzugt endständig.
Das Silangruppen-haltige organische Polymer weist bevorzugt ein mittleres Molekulargewicht, bestimmt mittels GPC gegenüber Polystyrol-Standard, im Bereich von 1'000 bis 30'000 g/mol, insbesondere von 2'000 bis 20'000 g/mol, auf. Das Silangruppen-haltige organische Polymer weist bevorzugt ein Silan-Equivalentgewicht von 300 bis 25'000 g/Eq, insbesondere von 500 bis 15'000 g/Eq, auf.

Das Silangruppen-haltige organische Polymer kann bei Raumtemperatur fest oder flüssig vorliegen. Bevorzugt ist es bei Raumtemperatur flüssig.

Meist bevorzugt handelt es sich beim Silangruppen-haltigen organischen Polymer um einen bei Raumtemperatur flüssigen Silangruppen-haltigen Polyether, wobei die Silangruppen insbesondere Dialkoxysilangruppen und/oder Trialkoxysilangruppen, besonders bevorzugt Trimethoxysilangruppen oder Triethoxysilangruppen, sind.

Verfahren zur Herstellung von Silangruppen-haltigen Polyethern sind dem Fachmann bekannt.
In einem bevorzugten Verfahren sind Silangruppen-haltige Polyether erhältlich aus der Umsetzung von Allylgruppen-haltigen Polyethern mit Hydrosilanen, gegebenenfalls unter Kettenverlängerung mit beispielsweise Diisocyanaten.
In einem weiteren bevorzugten Verfahren sind Silangruppen-haltige Polyether erhältlich aus der Copolymerisation von Alkylenoxiden und Epoxysilanen, gegebenenfalls unter Kettenverlängerung mit beispielsweise Diisocyanaten.
In einem weiteren bevorzugten Verfahren sind Silangruppen-haltige Polyether erhältlich aus der Umsetzung von Polyetherpolyolen mit Isocyanatosilanen, gegebenenfalls unter Kettenverlängerung mit Diisocyanaten.
In einem weiteren bevorzugten Verfahren sind Silangruppen-haltige Polyether erhältlich aus der Umsetzung von Isocyanatgruppen-haltigen Polyethern, insbesondere NCO-terminierten Urethan-Polyethern aus der Umsetzung von Polyetherpolyolen mit einer überstöchiometischen Menge an Polyisocyanaten, mit Aminosilanen, Hydroxysilanen oder Mercaptosilanen. Silangruppen-haltige Polyether aus diesem Verfahren sind besonders bevorzugt. Dieses Verfahren ermöglicht den Einsatz einer Vielzahl von kommerziell gut verfügbaren, kostengünstigen Ausgangsmaterialien, womit unterschiedliche Polymereigenschaften erhalten werden können, beispielsweise eine hohe Dehnbarkeit, eine hohe Festigkeit, ein niedriges Elastizitätsmodul, ein tiefer Glasübergangspunkt oder eine hohe Witterungsbeständigkeit.

Als Silangruppen-haltige Polyether sind auch kommerziell erhältliche Produkte geeignet, insbesondere die Folgenden: MS Polymer™ (von Kaneka Corp.; insbesondere die Typen S203H, S303H, S227, S810, MA903 und S943); MS Polymer™ bzw. Silyl™ (von Kaneka Corp.; insbesondere die Typen SAT010, SAT030, SAT200, SAX350, SAX400, SAX725, MAX450, MAX951); Excestar® (von Asahi Glass Co. Ltd.; insbesondere die Typen S2410, S2420, S3430, S3630); SPUR+* (von Momentive Performance Materials; insbesondere die Typen 1010LM, 1015LM, 1050MM); Vorasil™ (von Dow Chemical Co.; insbesondere die Typen 602 und 604); Desmoseal® (von Bayer MaterialScience AG; insbesondere die Typen S XP 2458, S XP 2636, S XP 2749, S XP 2774 und S XP 2821), TEGOPAC® (von Evonik Industries AG; insbesondere die Typen Seal 100, Bond 150, Bond 250), Polymer ST (von Hanse Chemie AG/Evonik Industries AG, insbesondere die Typen 47, 48, 61, 61LV, 77, 80, 81); Geniosil® STP (von Wacker Chemie AG; insbesondere die Typen E10, E15, E30, E35).

Besonders bevorzugt enthält die Zusammensetzung mindestens ein Silangruppen-haltiges Polymer in Form eines Polyorganosiloxans mit endständigen Silangruppen.

Bevorzugt ist das Umsetzungsprodukt in der Zusammensetzung in einer solchen Menge vorhanden, dass die Konzentration an Amidin-Gruppen aus dem Umsetzungsprodukt bezogen auf die Menge des Silangruppen-haltigen Polymers im Bereich von 0.1 bis 20 mmol/100 g Polymer, bevorzugt 0.2 bis 15 mmol/100 g Polymer, insbesondere 0.2 bis 10 mmol/100 g Polymer, liegt.
Eine solche Zusammensetzung weist eine gute Lagerfähigkeit und eine schnelle Aushärtung auf.

Zusätzlich zum Umsetzungsprodukt kann die Zusammensetzung weitere Katalysatoren, insbesondere für die Vernetzung von Silangruppen, enthalten. Als weitere Katalysatoren geeignet sind insbesondere Metall-Verbindungen und/oder basische Stickstoff- oder Phosphorverbindungen.

Geeignete Metall-Verbindungen sind insbesondere Verbindungen von Zinn, Titan, Zirkonium, Aluminium oder Zink, insbesondere Diorganozinn(IV)-Verbindungen wie insbesondere Dibutylzinn(IV)-diacetat, Dibutylzinn(IV)-dilaurat, Dibutylzinn(IV)-dineodecanoat oder Dibutylzinn(IV)-bis(acetylacetonat) und Dioctylzinn(IV)-dilaurat, sowie Titan(IV)- oder Zirkonium(IV)- oder Aluminium(III)- oder Zink(II)-Komplexe mit insbesondere Alkoxy-, Carboxylat-, 1,3-Diketonat-, 1,3-Ketoesterat- oder 1,3-Ketoamidat-Liganden.

Geeignete basische Stickstoff- oder Phosphorverbindungen sind insbesondere Imidazole, Pyridine, Phosphazen-Basen oder bevorzugt Amine, Hexahydrotriazine, Biguanide, Guanidine oder weitere Amidine.

Geeignete Amine sind insbesondere Alkyl-, Cycloalkyl- oder Aralkylamine wie Triethylamin, Triisopropylamin, 1-Butylamin, 2-Butylamin, tert.Butylamin, 3-Methyl-1-butylamin, 3-Methyl-2-butylamin, Dibutylamin, Tributylamin, Hexylamin, Dihexylamin, Cyclohexylamin, Dicyclohexylamin, Dimethylcyclohexylamin, Benzylamin, Dibenzylamin, Dimethylbenzylamin, Octylamin, 2-Ethylhexylamin, Di-(2-ethylhexyl)amin, Laurylamin, N,N-Dimethyl-laurylamin, Stearylamin, N,N-Dimethyl-stearylamin; von natürlichen Fettsäuregemischen abgeleitete Fettamine, wie insbesondere Cocoalkylamin, N,N-Dimethyl-cocoalkylamin, C₁₆₋₂₂-Alkylamin, N,N-Dimethyl-C₁₆₋₂₂-alkylamin, Soyaalkylamin, N,N-Dimethyl-soyaalkylamin, Oleylamin, N,N-Dimethyl-oleylamin, Talgalkylamin oder N,N-Dimethyl-talgalkylamin, erhältlich beispielsweise unter den Handelsnamen Armeen® (von Akzo Nobel) oder Rofamin® (von Ecogreen Oleochemicals); aliphatische, cycloaliphatische oder araliphatische Diamine wie Ethylendiamin, Butandiamin, Hexamethylendiamin, Dodecandiamin, Neopentandiamin, 2-Methyl-pentamethylendiamin (MPMD), 2,2(4),4-Trimethylhexamethylendiamin (TMD), Isophorondiamin (IPD), 2,5(2,6)-Bis-(aminomethyl)-bicyclo[2.2.1]heptan (NBDA), 1,3-Xylylendiamin (MXDA), N,N'-Di(tert.butyl)ethylendiamin, N,N,N',N'-Tetramethyl-ethylendiamin, N,N,N',N'-Tetramethyl-propylendiamin, N,N,N',N'-Tetramethyl-hexamethylendiamin, 3-Dimethylaminopropylamin, 3-(Methylamino)propylamin, 3-(Cyclohexylamino)propylamin, Piperazin, N-Methylpiperazin, N,N'-Dimethylpiperazin, 1,4-Diazabicyclo[2.2.2]octan, Fettpolyamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, erhältlich beispielsweise unter dem Handelsnamen Duomeen® (von Akzo Nobel); Polyalkylenamine wie Diethylentriamin, Dipropylentriamin, Triethylentetramin (TETA), Tetraethylenpentamin (TEPA), Pentamethylenhexamin (PEHA), 3-(2-Aminoethyl)aminopropylamin, N,N'-Bis(3-aminopropyl)ethylendiamin, N-(3-Aminopropyl)-N-methylpropandiamin, Bis(3-dimethylaminopropyl)amin, N-(3-Dimethylaminopropyl)-1,3-propylendiamin, N-(2-Aminoethyl)piperazin (N-AEP), N-(2-Aminopropyl)piperazin, N,N'-Di-(2-aminoethyl)piperazin, 1-Methyl-4-(2-dimethylaminoethyl)piperazin, N,N,N',N",N"-Pentamethyldiethylentriamin, N,N,N',N",N"-Pentamethyldipropylentriamin, Polyethylenimine, erhältlich beispielsweise unter den Handelsnamen Lupasol® (von BASF) und Epomin® (von Nippon Shokubai); Etheramine, wie insbesondere 2-Methoxyethylamin, 2-Ethoxyethylamin, 3-Methoxypropylamin, 3-Ethoxypropylamin, 3-(2-Ethylhexyloxy)propylamin, 3-(2-Methoxyethoxy)propylamin, 2(4)-Methoxyphenylethylamin, Morpholin, N-Methylmorpholin, N-Ethylmorpholin, 2-Aminoethylmorpholin, Bis(2-aminoethyl)ether, Bis(dimethylaminoethyl)-ether, Bis(dimorpholinoethyl)ether, N,N,N'-Trimethyl-N'-hydroxyethylbis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder 2-Aminopropyl-terminierte Glykole, wie sie beispielsweise unter dem Handelsnamen Jeffamin® (von Huntsman) erhältlich sind; Aminoalkohole, wie insbesondere Ethanolamin, Isopropanolamin, Diethanolamin, Diisopopanolamin, Triethanolamin, Triisopropanolamin, N-Butylethanolamin, Diglykolamin, N,N-Diethylethanolamin, N-Methyldiethanolamin, N-Methyldiisopropylamin, N,N,N'-Trimethylaminoethyl-ethanolamin, N-(3-Dimethylaminopropyl)-N,N-diisopropanolamin, N,N-Bis(3-dimethylaminopropyl)-N-isopropanolamin, 2-(2-Dimethylaminoethoxy)ethanolamin oder Addukte aus Mono- und Polyaminen mit Epoxiden oder Diepoxiden; Phenolgruppen-haltige Amine, wie insbesondere Kondensationsprodukte aus Phenolen, Aldehyden und Aminen (sogenannte Mannich-Basen und Phenalkamine) wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin sowie im Handel unter den Markennamen Cardolite® (von Cardolite), Aradur® (von Huntsman) und Beckopox® (von Cytec) erhältliche Phenalkamine; Amidgruppen-haltige Polyamine, sogenannte Polyamidoamine, wie sie im Handel erhältlich sind, beispielsweise unter den Markennamen Versamid® (von Cognis), Aradur® (von Huntsman), Euretek® (von Huntsman) oder Beckopox® (von Cytec); oder Aminosilane, wie insbesondere 3-Aminopropyltrimethoxysilan, 3-Aminopropyldimethoxymethylsilan, N-(2-Aminoethyl)-3-aminopropyltrimethoxysilan, N-(2-Aminoethyl)-3-aminopropyl-methyldimethoxysilan, N-(2-Aminoethyl)-N'-[3-(trimethoxysilyl)propyl]ethylendiamin oder deren Analoga mit Ethoxy- anstelle der Methoxygruppen am Silicium.
Geeignete Hexahydrotriazine sind insbesondere 1,3,5-Hexahydrotriazin oder 1,3,5-Tris(3-(dimethylamino)propyl)-hexahydrotriazin.
Geeignete Biguanide sind insbesondere Biguanid, 1-Butylbiguanid, 1,1-Dimethylbiguanid, 1-Butylbiguanid, 1-Phenylbiguanid oder 1-(o-Tolyl)biguanid (OTBG).
Geeignete weitere Guanidine sind insbesondere 1-Butylguanidin, 1,1-Dimethylguanidin, 1,3-Dimethylguanidin, 1,1,3,3-Tetramethylguanidin (TMG), 2-(3-(Trimethoxysilyl)propyl)-1,1,3,3-tetramethylguanidin, 2-(3-(Methyldimethoxysilyl)-propyl)-1,1,3,3-tetramethylguanidin, 2-(3-(Triethoxysilyl)propyl)-1,1,3,3-tetramethylguanidin, 1,5,7-Triazabicyclo[4.4.0]dec-5-en (TBD), 7-Methyl-1,5,7-triazabicyclo[4.4.0]dec-5-en, 7-Cyclohexyl-1,5,7-triazabicyclo[4.4.0]dec-5-en, 1-Phenylguanidin, 1-(o-Tolyl)guanidin (OTG), 1,3-Diphenylguanidin, 1,3-Di(o-tolyl)guanidin oder 2-Guanidinobenzimidazol.
Geeignete weitere Amidine sind insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en, 6-Dibutylamino-1,8-diazabicyclo[5.4.0]undec-7-en, N,N'-Di-n-hexylacetamidin (DHA), 2-Methyl-1,4,5,6-tetrahydropyrimidin, 1,2-Dimethyl-1 ,4,5,6-tetrahydropyrimidin, 2,5,5-Trimethyl-1 ,4,5,6-tetrahydropyrimidin, N-(3-Trimethoxysilylpropyl)-4,5-dihydroimidazol oder N-(3-Triethoxysilylpropyl)-4,5-dihydroimidazol.

Weiterhin kann die Zusammensetzung als Co-Katalysator eine Säure enthalten, insbesondere eine Carbonsäure. Bevorzugt sind aliphatische Carbonsäuren wie Ameisensäure, Laurinsäure, Stearinsäure, Isostearinsäure, Ölsäure, 2-Ethyl-2,5-dimethylcapronsäure, 2-Ethylhexansäure, Neodecansäure, Fettsäuregemische aus der Verseifung von natürlichen Fetten und Ölen oder Di- und Polycarbonsäuren, insbesondere Poly(meth)acrylsäuren.

Die Zusammensetzung ist in einer bevorzugten Ausführungsform im Wesentlichen frei von Organozinn-Verbindungen. Organozinn-freie Zusammensetzungen sind hinsichtlich Gesundheitsschutz und Umweltschutz vorteilhaft. Insbesondere beträgt der Zinngehalt der härtbaren Zusammensetzung weniger als 0.1 Gew.-%, insbesondere weniger als 0.05 Gew.-%.

Die Zusammensetzung enthält in einer weiteren bevorzugten Ausführungsform eine Kombination aus mindestens einem Umsetzungsprodukt wie beschrieben und mindestens einer Organozinn-Verbindung, insbesondere einer Diorganozinn(IV)-Verbindung wie die vorgängig genannten. Eine solche Zusammensetzung weist bereits bei einem geringen Zinn-Gehalt eine hohe Aushärtungsgeschwindigkeit auf, was aus toxikologischen und ökologischen Gründen vorteilhaft ist.

In einer Ausführungsform enthält die Zusammensetzung neben dem erfindungsgemässen Umsetzungsprodukt zusätzlich mindestens ein Organotitanat als Katalysator. Eine Kombination aus dem erfindungsgemässen Umsetzungsprodukt und einem Organotitanat weist eine besonders hohe katalytische Aktivität auf. Dadurch wird eine schnelle Aushärtung einer solchen Zusammensetzung bei einer verhältnismässig geringen Einsatzmenge an Organotitanat ermöglicht.
Als Organotitanat geeignet sind insbesondere Titan(IV)-Komplexverbindungen. Bevorzugte Organoititanate sind insbesondere ausgewählt aus
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- sowie höherkondensierte Organotitanate, insbesondere oligomeres Titan(IV)-tetrabutanolat, auch als Polybutyltitanat bezeichnet;
wobei als Alkoholat-Liganden insbesondere Isobutoxy, n-Butoxy, Isopropoxy, Ethoxy und 2-Ethylhexoxy geeignet sind.

Insbesondere geeignet sind die kommerziell erhältlichen Typen Tyzor® AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) und Ken-React® KR® TTS, 7, 9QS, 12, 26S, 33DS, 38S, 39DS, 44, 134S, 138S, 133DS, 158FS oder LICA® 44 (alle von Kenrich Petrochemicals).

Ganz besonders geeignete Organotitanate sind ausgewählt aus Bis(ethylacetoacetato)diisobutoxy-titan(IV) (kommerziell erhältlich beispielsweise als Tyzor® IBAY von Dorf Ketal), Bis(ethylacetoacetato)diisopropoxy-titan(IV) (kommerziell erhältlich beispielsweise als Tyzor® DC von Dorf Ketal), Bis(acetylacetonato)diisopropoxy-titan(IV), Bis(acetylacetonato)diisobutoxy-titan(IV), Tris(oxyethyl)-amin-isopropoxy-titan(IV), Bis[tris(oxyethyl)amin]diisopropoxy-titan(IV), Bis(2-ethylhexan-1 ,3-dioxy)-titan(IV), Tris[2-((2-Aminoethyl)amino)ethoxy]ethoxy-titan(IV), Bis(neopentyl(diallyl)oxy)-diethoxy-titan(IV), Titan(IV)-tetrabutanolat, Tetra(2-ethylhexyloxy)titanat, Tetra(isopropoxy)titanat und Polybutyltitanat. Am meisten bevorzugt sind Bis(ethylacetoacetato)diisobutoxy-titan(IV) oder Bis(ethylacetoacetato)diiisopropoxy-titan(IV).

Die Zusammensetzung kann weitere Bestandteile enthalten, insbesondere die folgenden Hilfs- und Zusatzmittel:
- Haftvermittler und/oder Vernetzer, insbesondere Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-dimethoxymethylsilan, N-(2-Aminoethyl)-N'-[3-(trimethoxysilyl)propyl]ethylendiamin oder deren Analoga mit Ethoxy- anstelle von Methoxygruppen, weiterhin N-Phenyl-, N-Cyclohexyl- oder N-Alkylaminosilane, Mercaptosilane, Epoxysilane, (Meth)acrylosilane, Anhydridosilane, Carbamatosilane, Alkylsilane oder Iminosilane, oligomere Formen dieser Silane, Addukte aus primären Aminosilanen mit Epoxysilanen oder (Meth)acrylosilanen oder Anhydridosilanen, aminofunktionelle Alkylsilsesquioxane, insbesondere aminofunktionelles Methylsilsesquioxan oder aminofunktionelles Propylsilsesquioxan. Insbesondere geeignet sind 3-Aminopropyltrimethoxysilan, 3-Aminopropyltriethoxysilan, N-(2-Aminoethyl)-3-aminopropyltrimethoxysilan, N-(2-Aminoethyl)-3-aminopropyl-triethoxysilan, 3-Glycidoxypropyltrimethoxysilan, 3-Glycidoxypropyltriethoxysilan oder 3-Ureidopropyltrimethoxysilan, oder oligomere Formen dieser Silane;
- Trocknungsmittel, insbesondere Tetraethoxysilan, Vinyltrimethoxysilan, Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, Calciumoxid oder Molekularsiebe, insbesondere Vinyltrimethoxysilan oder Vinyltriethoxysilan;
- Weichmacher, insbesondere Trialkylsilyl-terminierte Polydialkylsiloxane, vorzugsweise Trimethylsilyl-terminierte Polydimethylsiloxane, insbesondere mit Viskositäten im Bereich von 10 bis 1'000 mPa·s, oder entsprechende Verbindungen, bei denen einige der Methylgruppen ersetzt sind durch andere organische Gruppen, insbesondere Phenyl-, Vinyl- oder Trifluorpropylgruppen, sogenannte Reaktivweichmacher in Form von monofunktionellen, also einseitig reaktiven, Polysiloxanen, Carbonsäureester wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat (DINCH), Terephthalate, insbesondere Dioctylterephthalat, Trimellitate, Adipate, insbesondere Dioctyladipat, Azelate, Sebacate, Benzoate, Polyole, insbesondere Polyoxyalkylenpolyole oder Polyesterpolyole, Glykolether, Glykolester, organische Phosphor- oder Sulfonsäureester, Polybutene oder von natürlichen Fetten oder Ölen abgeleitete Weichmacher, insbesondere epoxidiertes Soja- oder Leinöl, wobei Siloxangruppen-haltige Weichmacher besonders geeignet sind für Silangruppen-haltige Polymere in Form von Polyorganosiloxanen;
- Lösemittel;
- anorganische oder organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Farbstoffe;
- Pigmente, insbesondere Titandioxid oder Eisenoxide;
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether oder hydrophob modifizierte Polyoxyethylene;
- Stabilisatoren gegen Oxidation, Wärme, Licht oder UV-Strahlung;
- natürliche Harze, Fette oder Öle wie Kolophonium, Schellack, Leinöl, Rizinusöl oder Sojaöl;
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid und Magnesiumhydroxid, oder insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis-oder Tris(isopropylphenyl)phosphate unterschiedlichen Isopropylierungsgrades, Resorcinolbis(diphenylphosphat), Bisphenol-A-bis(diphenylphosphat) oder Ammoniumpolyphosphate;
- oberflächenaktive Substanzen, insbesondere Netzmittel, Verlaufsmittel, Entlüftungsmittel oder Entschäumer;
- Biozide, insbesondere Algizide, Fungizide oder das Pilzwachstum hemmende Substanzen;
sowie weitere üblicherweise in härtbaren Zusammensetzungen eingesetzte Substanzen. Es kann sinnvoll sein, gewisse Bestandteile vor dem Einmischen in die Zusammensetzung chemisch oder physikalisch zu trocknen.

Die Zusammensetzung wird vorzugsweise unter Ausschluss von Feuchtigkeit hergestellt und aufbewahrt. Typischerweise ist sie in einer geeigneten Verpackung oder Anordnung, wie insbesondere einer Flasche, einer Büchse, einem Beutel, einem Eimer, einem Fass oder einer Kartusche, unter Ausschluss von Feuchtigkeit lagerstabil.

Die Zusammensetzung kann in Form einer einkomponentigen oder in Form einer mehrkomponentigen, insbesondere zweikomponentigen, Zusammensetzung vorliegen.
Als "einkomponentig" wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist. Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, gegebenenfalls unter Einwirkung von Feuchtigkeit.

Für den Fall, dass die Zusammensetzung ein Polyorganosiloxan mit endständigen Silangruppen enthält, ist sowohl eine einkomponentige Zusammensetzung, auch als RTV-1 bezeichnet, als auch eine zweikomponentige Zusammensetzung, auch als RTV-2 bezeichnet, bevorzugt. Im Fall einer RTV-2 Zusammensetzung ist das Polyorganosiloxan mit endständigen Silangruppen bevorzugt ein Bestandteil der ersten Komponente und ein Silanvernetzer, insbesondere ein Silan der Formel (IX), ist bevorzugt ein Bestandteil der zweiten Komponente. Das erfindungsgemässe Umsetzungsprodukt kann dabei in der ersten und/oder in der zweiten Komponente enthalten sein.
Für den Fall, dass die Zusammensetzung ein Silangruppen-haltiges organisches Polymer enthält, ist die Zusammensetzung bevorzugt einkomponentig.

Eine zweite oder gegebenenfalls weitere Komponenten wird bzw. werden mit der ersten Komponente vor oder bei der Applikation vermischt, insbesondere über einen Statikmischer oder über einen dynamischen Mischer.
Die Zusammensetzung wird insbesondere umgebungswarm, bevorzugt in einem Temperaturbereich zwischen 0 °C und 45 °C, insbesondere 5 °C bis 35 °C, appliziert und härtet auch bei diesen Bedingungen aus.
Bei der Applikation beginnt die Vernetzungsreaktion der Silangruppen, gegebenenfalls unter Einfluss von Feuchtigkeit. Vorhandene Silangruppen können mit vorhandenen Silanolgruppen zu Siloxangruppen (Si-O-Si-Gruppen) kondensieren. Vorhandene Silangruppen können bei Kontakt mit Feuchtigkeit auch zu Silanolgruppen (Si-OH-Gruppen) hydrolysieren und durch nachfolgende Kondensationsreaktionen Siloxangruppen (Si-O-Si-Gruppen) bilden. Als Ergebnis dieser Reaktionen härtet die Zusammensetzung schliesslich aus. Das erfindungsgemässe Umsetzungsprodukt beschleunigt diese Aushärtung.
Falls für die Aushärtung Wasser benötigt wird, kann dieses entweder aus der Luft (Luftfeuchtigkeit) und/oder den Substraten oder Füllstoffen stammen, oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation Wasser oder eine Wasser enthaltende Komponente zugesetzt werden, zum Beispiel in Form einer wasserhaltigen oder Wasser freisetzenden Flüssigkeit oder Paste. Eine Paste ist insbesondere geeignet für den Fall, dass die Zusammensetzung selber in Form einer Paste vorliegt.
Bei einer Aushärtung mittels Luftfeuchtigkeit härtet die Zusammensetzung von aussen nach innen durch, wobei zunächst eine Haut an der Oberfläche der Zusammensetzung gebildet wird. Die sogenannte Hautbildungszeit stellt ein Mass für die Aushärtungsgeschwindigkeit der Zusammensetzung dar. Die Geschwindigkeit der Aushärtung wird dabei im Allgemeinen von verschiedenen Faktoren, wie beispielsweise der Verfügbarkeit von Wasser, der Temperatur usw., bestimmt.

Die Zusammensetzung eignet sich für eine Vielzahl von Anwendungen, insbesondere als Anstrich, Lack oder Primer, als Harz zur Herstellung von Faserverbundwerkstoff (Composite), als Hartschaum, Weichschaum, Formteil, Elastomer, Faser, Folie oder Membran, als Vergussmasse, Dichtstoff, Klebstoff, Belag, Beschichtung oder Anstrich für Bau- und Industrieanwendungen, beispielsweise als Nahtabdichtung, Hohlraumversiegelung, Elektroisolationsmasse, Spachtelmasse, Fugendichtstoff, Schweiss- oder Bördelnahtdichtstoff, Montageklebstoff, Karrosserieklebstoff, Scheibenklebstoff, Sandwichelementklebstoff, Kaschierklebstoff, Laminatklebstoff, Verpackungsklebstoff, Holzklebstoff, Parkettklebstoff, Verankerungsklebstoff, Bodenbelag, Bodenbeschichtung, Balkonbeschichtung, Dachbeschichtung, Betonschutzbeschichtung, Parkhausbeschichtung, Versiegelung, Rohrbeschichtung, Korrosionsschutzbeschichtung, Textilbeschichtung, Dämpfungselement, Dichtungselement oder Spachtelmasse.
Besonders geeignet ist die Zusammensetzung als Klebstoff und/oder Dichtstoff, insbesondere für die Fugenabdichtung und für elastische Klebeverbindungen in Bau- und Industrieanwendungen, sowie als elastische Beschichtung mit rissüberbrückenden Eigenschaften, insbesondere zum Schützen und/oder Abdichten von beispielsweise Dächern, Böden, Balkonen, Parkdecks oder Betonröhren.
Bevorzugt stellt die Zusammensetzung somit einen Klebstoff oder einen Dichtstoff oder eine Beschichtung dar.

Für eine Anwendung als Klebstoff oder Dichtstoff weist die Zusammensetzung bevorzugt eine pastöse Konsistenz mit strukturviskosen Eigenschaften auf. Ein solcher pastöser Dichtstoff oder Klebstoff wird insbesondere aus handelsüblichen Kartuschen, welche manuell, mittels Druckluft oder Batterie betrieben werden, oder aus einem Fass oder Hobbock mittels einer Förderpumpe oder eines Extruders, gegebenenfalls mittels eines Applikationsroboters, auf ein Substrat aufgetragen.
Für eine Anwendung als Beschichtung weist die Zusammensetzung bevorzugt eine bei Raumtemperatur flüssige Konsistenz mit selbstverlaufenden Eigenschaften auf. Gegebenenfalls ist sie leicht thixotrop, so dass die Beschichtung an abschüssigen bis senkrechten Flächen applizierbar ist, ohne sofort wegzufliessen. Sie wird insbesondere appliziert mittels Rolle oder Pinsel oder durch Ausgiessen und Verteilen mittels beispielsweise einem Roller, einem Schaber oder einer Zahntraufel.

Bei der Applikation wird die Zusammensetzung bevorzugt auf mindestens ein Substrat appliziert.
Geeignete Substrate sind insbesondere
- Glas, Glaskeramik, Beton, Mörtel, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Kupfer, Eisen, Stahl, Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Farben oder Lacke, insbesondere Automobildecklacke.
Die Substrate können bei Bedarf vor dem Applizieren der Zusammensetzung vorbehandelt werden, insbesondere durch physikalische und/oder chemische Reinigungsverfahren oder durch das Aufbringen eines Haftvermittlers, einer Haftvermittlerlösung oder eines Primers.
Besonders geeignet ist die Zusammensetzung für den Kontakt mit Substraten, die besonders empfindlich sind auf Störungen durch migrierende Substanzen, insbesondere durch das Ausbilden von Verfärbungen oder Flecken. Dies sind insbesondere feinporige Substrate wie Marmor, Kalkstein oder andere Natursteine, Gips, Zementmörtel oder Beton, aber auch Kunststoffe. Insbesondere auf PVC werden bei der Anwesenheit von Katalysatoren wie beispielsweise DBU oder TMG starke Verfärbungen beobachtet, die sich durch Reinigung nicht entfernen lassen. Solche Effekte werden mit dem erfindungsgemässen Umsetzungsprodukt nicht beobachtet.

Verklebt oder abgedichtet werden können zwei gleichartige oder zwei verschiedene Substrate, insbesondere die vorgängig genannten Substrate.

Nach der Aushärtung der Zusammensetzung mit Wasser, insbesondere in Form von Luftfeuchtigkeit, und/oder mit mindestens einem geeigneten Vernetzer wird eine ausgehärtete Zusammensetzung erhalten.

Aus der Anwendung der Zusammensetzung entsteht ein Artikel, welcher mit der Zusammensetzung insbesondere verklebt, abgedichtet oder beschichtet wurde. Beim Artikel handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter; oder der Artikel kann ein Anbauteil davon sein.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet.
"MW" steht für das Molekulargewicht.
"AcEW" steht für das Acrylat-Equivalentgewicht.
"MAcEW" steht für das Methacrylat-Equivalentgewicht.
"EEW" steht für das Epoxid-Equivalentgewicht.

**Infrarotspektren** (FT-IR) wurden auf einem mit horizontaler ATR-Messeinheit mit Diamant-Kristall ausgestatteten FT-IR Gerät Nicolet iS5 von Thermo Scientific gemessen. Flüssige Proben wurden unverdünnt als Filme aufgetragen, feste Proben wurden in CH₂Cl₂ gelöst. Die Absorptionsbanden sind in Wellenzahlen (cm⁻¹) angegeben (Messfenster: 4000-650 cm⁻¹).
Die **Hautbildungszeit** (HBZ) wurde dadurch bestimmt, dass einige Gramm der Zusammensetzung in einer Schichtdicke von ca. 2 mm auf Pappkarton aufgetragen wurden und im Normklima die Zeitdauer gemessen wurde, bis beim leichten Antippen der Oberfläche der Zusammensetzung mittels einer Pipette aus LDPE erstmals keine Rückstände auf der Pipette mehr zurückblieben.
Die Beschaffenheit der **Oberfläche** wurde haptisch geprüft.
Die mechanischen Eigenschaften **Zugfestigkeit, Bruchdehnung** und **E-Modul** (bei 0-5% oder bei 0-50% Dehnung) wurden gemäss DIN EN 53504 bei einer Zuggeschwindigkeit von 200 mm/min. gemessen.

### verwendete Polysiloxane der Formel (II):

| | |
|---|---|
| Silmer® ACR Di-10 | Acryloxy-funktionelles Polysiloxan, MW 1'100 g/mol, AcEW 550 g/mol, von Siltech |
| Silmer® ACR D2 | Acryloxy-funktionelles Polysiloxan, MW 1'400 g/mol, AcEW 560 g/mol, von Siltech |
| Tegomer® V-Si 2250 | difunktionelles Polysiloxan mit Acryloxyorgano-Endgruppen, AcEW ca. 1000 g/mol, von Evonik |
| X-22-164 | difunktionelles Polysiloxan mit Methacryloxy-Endgruppen, AcEW 190 g/mol, von Shin-Etsu |
| X-22-164AS | difunktionelles Polysiloxan mit Methacryloxy-Endgruppen, AcEW 450 g/mol, von Shin-Etsu |
| Tegomer® E-Si 2330 | Epoxy-funktionelles Polydimethylsiloxan, MW ca. 2'400 g/mol, EEW ca. 1'200 g/mol, von Evonik |
| Silmer® EP Di-25 | difunktionelles Polysiloxan mit Epoxid-Endgruppen, MW 2'050 g/mol, EEW 1025 g/mol, von Siltech |

### Herstellung von Amidin oder Guanidin der Formel HZ oder HX-A-Z:

**Amidin A1:** 2-Methyl-1,4,5,6-tetrahydropyrimidin
In einem Rundkolben wurden 7.58 g 1,3-Propandiamin, 16.37 g Trimethylorthoacetat und 0.60 g Lanthan(III)-trifluormethansulfonat vermischt und unter Rühren während 24 Stunden auf 100 °C erwärmt. Darauf wurde das Reaktionsgemisch im Vakuum von den flüchtigen Bestandteilen befreit. Man erhielt 5.97 g eines weissen Feststoffs.
FT-IR: 3214, 3177, 2996, 2925, 2843, 1630 (C=N), 1542, 1475, 1438, 1380, 1360, 1322, 1294, 1273, 1204, 1191, 1139, 1114, 1095, 1035, 1009, 977, 915, 875, 839, 731.

### Vergleichsbeispiel:

**G1:** Reaktionsprodukt enthaltend 1-(3-Aminopropyl)-2,3-dicyclohexylguanidin
In einem Rundkolben wurden 2.50 g 1,3-Diaminopropan und 6.89 g N,N'-Dicyclohexylcarbodiimid vermischt und die Mischung unter Rühren auf 120 °C erwärmt. In regelmässigen Abständen wurde das Reaktionsgemisch mittels FT-IR-Spektroskopie untersucht. Nach 1 Stunde war die Carbodiimid-Bande bei ca. 2120 cm⁻¹ vollständig verschwunden. Darauf wurde das Reaktionsgemisch im Vakuum von den flüchtigen Bestandteilen befreit. Man erhielt 9.36 g eines hellgelben, geruchsarmen Öls.
FT-IR: 3371 (N-H), 2921, 2849, 1627 (C=N), 1502, 1447, 1324, 1238, 1147, 1111, 888, 713.

### Herstellung von erfindungsgemässen Umsetzungsprodukten: (U6-U11 sind Vergleichskatalysatoren)

### Katalysator U1:

In einem Rundkolben wurde eine Lösung von 2.14 g Amidin A1 in 7 mL Tetrahydrofuran mit 11.43 g Silmer® ACR Di-10 vermischt und während 40 min bei 40 °C gerührt. Darauf wurde das Reaktionsgemisch im Vakuum von den flüchtigen Bestandteilen befreit. Man erhielt ein geruchloses gelbliches Öl.
FT-IR: 3216, 2960, 1736, 1622 (C=N), 1558, 1415, 1384, 1318, 1257, 1172, 1257, 1210, 1172, 1013, 926, 862, 790, 702.

### Katalysator U2:

In einem Rundkolben wurde eine Lösung von 1.60 g Amidin A1 in 5 mL Tetrahydrofuran mit 4.44 g Silmer® ACR D2 vermischt und während 60 min bei 40 °C gerührt. Darauf wurde das Reaktionsgemisch im Vakuum von den flüchtigen Bestandteilen befreit. Man erhielt ein geruchloses bräunliches Öl. FT-IR: 3175, 2958, 2930, 2852, 1735, 1620 (C=N), 1551, 1484, 1427, 1361, 1318, 1257, 1173, 1012, 943, 841, 793, 754, 687.

### Katalysator U3:

In einem Rundkolben wurde eine Lösung von 2.04 g Amidin A1 in 5 mL Tetrahydrofuran mit 20.02 g Tegomer® V-Si 2250 vermischt und während 2 h bei 40 °C gerührt. Darauf wurde das Reaktionsgemisch im Vakuum von den flüchtigen Bestandteilen befreit. Man erhielt ein geruchloses bräunliches Öl. FT-IR: 2961, 2904, 2862, 1735, 1618 (C=N), 1430, 1413, 1383, 1361, 1318, 1258, 1217, 1179, 1080, 1012, 863, 789, 701, 686.

### Katalysator U4:

In einem Rundkolben wurden 2.25 g Amidin A1 mit 27.22 g Tegomer® E-Si 2330 vermischt und während 3 h bei 90 °C gerührt. Man erhielt ein geruchloses gelbliches Öl.
FT-IR: 2961, 2905, 2858, 1616 (C=N), 1413, 1318, 1258, 1011, 863, 792, 700.

### Katalysator U5:

In einem Rundkolben wurden 1.97 g Amidin A1 mit 23.82 g Silmer® EP Di-25 vermischt und während 3 h bei 90 °C gerührt. Man erhielt ein geruchloses gelbliches Öl.
FT-IR: 2961, 2904, 2863, 1616 (C=N), 1413, 1318, 1258, 1074, 1011, 863, 792, 699.

### Katalysator U6:

In einem Rundkolben wurde eine Lösung von 1.46 g Guanidin G1 in 4 mL Tetrahydrofuran mit 2.80 g Silmer® ACR Di-10 vermischt und während 2 h bei 25 °C gerührt. Darauf wurde das Reaktionsgemisch im Vakuum von den flüchtigen Bestandteilen befreit. Man erhielt ein geruchloses oranges Öl.
FT-IR: 2960, 2926, 2852, 1733, 1633 (C=N), 1508, 1449, 1411, 1359, 1258, 1183, 1067, 1015, 861, 792, 702.

### Katalysator U7:

In einem Rundkolben wurde eine Lösung von 1.60 g Guanidin G1 in 5 mL Tetrahydrofuran mit 1.55 g Silmer® ACR D2 vermischt und während 1 h bei 40 °C gerührt. Darauf wurde das Reaktionsgemisch im Vakuum von den flüchtigen Bestandteilen befreit. Man erhielt ein geruchloses bräunliches Öl.
FT-IR: 3270, 2925, 2851, 1732, 1631 (C=N), 1504, 1449, 1360, 1345, 1258, 1147, 1066, 1016, 888, 842, 796, 754, 702.

### Katalysator U8:

In einem Rundkolben wurde eine Lösung von 2.05 g Guanidin G1 in 4 mL Tetrahydrofuran mit 7.34 g Tegomer® V-Si 2250 vermischt und während 3 h bei 40 °C gerührt. Darauf wurde das Reaktionsgemisch im Vakuum von den flüchtigen Bestandteilen befreit. Man erhielt ein geruchloses bräunliches Öl.
FT-IR: 3373, 2961, 2929, 2854, 1737, 1633 (C=N), 1519, 1449, 1411, 1364, 1258, 1184, 1367, 1013, 910, 863, 792, 703, 686.

### Katalysator U9:

In einem Rundkolben wurden 1.66 g Guanidin G1 mit 1.03 g X-22-164 vermischt und während 20 h bei 100 °C gerührt. Man erhielt einen geruchlosen hellgrünen glasartigen Feststoff.
FT-IR: 3291, 2923, 2851, 1750, 1633 (C=N), 1505, 1449, 1375, 1321 1258, 1159, 1051, 978, 937, 889, 839, 794, 709.

### Katalysator U10:

In einem Rundkolben wurden 3.41 g Guanidin G1 mit 5.86 g X-22-164AS vermischt und während 48 h bei 100 °C gerührt. Man erhielt ein geruchloses hellgrünes Öl.
FT-IR: 3270, 2926, 2852, 1725, 1627 (C=N), 1568, 1449, 1366, 1317, 1257, 1150, 1018, 889, 783, 703.

### Katalysator U11:

In einem Rundkolben wurden 1.42 g Guanidin G1 mit 6.06 g Silmer® EP Di-25 vermischt und während 5 h bei 90 °C gerührt. Man erhielt ein geruchloses, leicht trübes, weissliches Öl.
FT-IR: 2961, 2928, 2853, 1633 (C=N), 1449, 1412, 1361, 1258, 1077, 1013, 863, 789, 704, 686.

### Herstellung von Silangruppen-haltigen Polvethern:

### Polymer STP-1:

Unter Feuchtigkeitsausschluss wurden 1000 g Polyol Acclaim® 12200 (Polyoxypropylendiol mit niedrigem Ungesättigtheitsgrad, von Bayer; OH-Zahl 11.0 mg KOH/g), 43.6 g Isophorondiisocyanat (IPDI; Vestanat® IPDI, von Evonik), 126.4 g Diisodecylphthalat (DIDP) und 0.1 g Bismuttris(neodecanoat) (10 Gew.-% in DIDP) unter stetigem Rühren auf 90 °C aufgeheizt und bei dieser Temperatur belassen, bis der titrimetrisch bestimmte Gehalt an freien Isocyanatgruppen einen stabilen Wert von 0.63 Gew.-% erreicht hatte. Anschliessend wurden 63.0 g N-(3-Trimethoxysilylpropyl)-amino-bernsteinsäurediethylester (Addukt aus 3-Aminopropyltrimethoxysilan und Maleinsäurediethylester; hergestellt nach den Angaben in US 5,364,955) eingemischt und die Mischung bei 90 °C solange gerührt, bis mittels FT-IR-Spektroskopie kein freies Isocyanat mehr nachgewiesen wurde. Der so erhaltene Trimethoxysilangruppen-haltige Polyether mit einem Silan-Equivalentgewicht von ca. 6880 g/Eq (aus den Einsatzmengen berechnet) wurde auf Raumtemperatur abgekühlt und unter Ausschluss von Feuchtigkeit aufbewahrt.

### Verwendete kommerzielle Katalysatoren:

| | |
|---|---|
| Cat.41 | Reaktionsprodukt von Kieselsäuretetraethylester mit Bis(acetyloxy)-dibutylstannan, Zinn-Gehalt ca. 23.8 Gewichts-% (Catalyst 41, von Wacker) |
| DBU | 1,8-Diazabicyclo[5.4.0]undec-7-en (Lupragen® N 700, von BASF) |
| TMG | 1,1,3,3-Tetramethylguanidin (von Sigma-Aldrich) |
| IBAY | Bis(ethylacetoacetato)diisobutoxy-titan(IV) (Tyzor® IBAY, von Dorf Ketal) |

### Zusammensetzungen auf Basis von Silangruppen-haltigen Polymeren:

Vergleichsbeispiele sind in den Tabellen 1 bis 4 mit "(Ref)" gekennzeichnet.

### Zusammensetzungen Z1 bis Z13

In einem Rundkolben wurden 71.1 g eines OH-terminierten linearen Polydimethylsiloxans mit einer Viskosität von ca. 50'000 mPas bei 23 °C (Wacker® Silicone Rubber Polymer FD 50, von Wacker) mit 2.6 g Vinyl-tris(methylethylketoximo)silan vermengt und während 15 Minuten unter Vakuum gerührt. In das so erhaltene Polydimethylsiloxan mit Vinyl-bis(methylethylketoximo)silyl-Endgruppen wurden 26.3 g Trimethylsilyl-terminiertes Polydimethylsiloxan (Wacker® AK 100 Siliconöl, von Wacker) eingerührt. Diese Mischung wurde mit verschiedenen Katalysatoren gemäss nachstehender Tabelle 1 vermengt und die Mischung auf Viskosität und Hautbildungszeit (HBZ) im Normklima, vor und nach Lagerung, geprüft. Die Hautbildungszeit dient dabei als Mass für die Aktivität des Katalysators in Bezug auf die Vernetzungsreaktion der Silangruppen, d.h. für die Vernetzungsgeschwindigkeit; die Veränderung der Viskosität und der Hautbildungszeit nach Lagerung sind ein Mass für die Lagerstabilität. Weiterhin wurde die applizierte Mischung nach 24 Stunden im Normklima daraufhin geprüft, ob die Oberfläche wie gewünscht trocken war oder sich ein schmieriger Film gebildet hatte, was ein Anzeichen für das Ausschwitzen des Katalysators aufgrund schlechter Verträglichkeit mit dem ausgehärteten Kunststoff ist, und/oder ob die Oberfläche klebrig war, was ein Anzeichen für eine unvollständige Aushärtung ist. Weiterhin wurde von der Mischung ein Film von 2 mm Dicke hergestellt, während 7 Tagen im Normklima ausgehärtet und auf mechanische Eigenschaften geprüft.
Die Ergebnisse sind in Tabelle 1 und 2 wiedergegeben.

Weiterhin wurde jede Mischung in Form einer Raupe auf ein weisses PVC-Substrat appliziert und im Normklima ausgehärtet. Darauf wurde das Substrat während 1 Stunde in einem Ofen auf 80 °C erwärmt. Danach waren bei den Referenz-Zusammensetzungen **Z11** und **Z12** bräunliche Verfärbungen auf dem PVC-Substrat neben und unter der ausgehärteten Raupe sichtbar, während bei den anderen Zusammensetzungen keine Verfärbungen auftraten.

**Tabelle 1 (Z5-Z9 sind Vergleichsbeispiele):**

| **Zusammensetzung** | **Katalysator** | **Menge** | **Konzentration¹** | **Viskosität [Pa·s]** | | **HBZ** | |
|---|---|---|---|---|---|---|---|
| | | | | **frisch** | **gelagert²** | **frisch** | **gelagert²** |
| **Z1** | U1 | 0.22 g | 0.5 | 11.8 | 11.9 | 22' | 20' |
| **Z2** | U2 | 0.30 g | 1.0 | 14.7 | 12.9 | 20' | 17' |
| **Z3** | U3 | 0.38 g | 0.5 | 12.1 | 12.5 | 35' | 30' |
| **Z4** | U4 | 0.46 g | 0.5 | 15.0 | 11.0 | 30' | 30' |
| **Z5** | U6 | 0.29 g | 0.5 | 12.9 | 11.6 | 26' | 22' |
| **Z6** | U7 | 0.39 g | 1.0 | 14.8 | 14.3 | 29' | 31' |
| **Z7** | U8 | 0.46 g | 0.5 | 11.6 | 11.8 | 42' | 47' |
| **Z8** | U10 | 0.27 g | 0.5 | 14.7 | 12.9 | 26' | 20' |
| **Z9** | U11 | 0.53 g | 0.5 | 15.4 | 13.7 | 30' | 27' |
| **Z10** (Ref) | Cat.41 | 0.33 g | 0.9 | 11.7 | 48.1 | 27' | 32' |
| **Z11** (Ref) | DBU | 0.04 g | 0.4 | 18.2 | 15.9 | 10' | 12' |
| **Z12** (Ref) | TMG | 0.03 g | 0.4 | 17.4 | 16.5 | 23' | 27' |
| **Z13** (Ref) | IBAY | 0.13 g | 0.4 | 19.7 | 19.9 | 27' | 47' |

| | | | | | | | |
|---|---|---|---|---|---|---|---|
| ¹ mmol Amidin- oder Guanidin-Gruppen oder Metallatome auf 100 g Ketoximato-Polydimethylsiloxan Polymer. ² während 7 Tagen bei 70 °C in geschlossenem Gebinde. | | | | | | | |

**Tabelle 2:**

| **Zusammensetzung** | **Oberfläche nach 24h** | **Zugfestigkeit** | **Bruchdehnung** | **E-Modul 0-50% Dehnung** |
|---|---|---|---|---|
| **Z1** | trocken | 0.25 MPa | 278% | 0.14 MPa |
| **Z2** | trocken | 0.22 MPa | 260% | 0.14 MPa |
| **Z3** | trocken | n.b. | n.b. | n.b. |
| **Z4** | trocken | 0.25 MPa | 307% | 0.13 MPa |
| **Z5** | trocken | n.b. | n.b. | n.b. |
| **Z6** | trocken | n.b. | n.b. | n.b. |
| **Z7** | trocken | 0.19 MPa | 142% | 0.12 MPa |
| **Z8** | trocken | 0.23 MPa | 196% | 0.14 MPa |
| **Z9** | trocken | 0.19 MPa | 213% | 0.14 MPa |
| **Z10** (Ref) | trocken | 0.24 MPa | 256% | 0.15 MPa |
| **Z11** (Ref) | trocken | 0.22 MPa | 135% | 0.13 MPa |
| **Z12** (Ref) | trocken | 0.15 MPa | 86% | 0.16 MPa |
| **Z13** (Ref) | trocken | 0.25 MPa | 116% | 0.18 MPa |

| | | | | |
|---|---|---|---|---|
| "n.b." steht für "nicht bestimmt" | | | | |

### Zusammensetzungen Z14 bis Z23:

Eine Zusammensetzung aus 96.5 g Polymer STP-1, 0.5 g Vinyltrimethoxysilan und 3.0 g 3-Aminopropyltrimethoxysilan wurde mit verschiedenen Katalysatoren in der angegebenen Menge gemäss Tabelle 3 vermengt und wie für Zusammensetzung Z1 beschrieben auf Viskosität, Hautbildungszeit (HBZ), Oberflächenbeschaffenheit sowie mechanische Eigenschaften geprüft.
Die Ergebnisse sind in Tabelle 3 und 4 wiedergegeben.

Weiterhin wurde jede Mischung in Form einer Raupe auf ein weisses PVC-Substrat appliziert und im Normklima ausgehärtet. Darauf wurde das Substrat während 1 Stunde in einem Ofen auf 80 °C erwärmt. Danach waren bei den Referenz-Zusammensetzungen **Z22** und **Z23** bräunliche Verfärbungen auf dem PVC-Substrat neben und unter der ausgehärteten Raupe sichtbar, während bei den anderen Zusammensetzungen keine Verfärbungen auftraten.

**Tabelle 33 (Z18-Z21 sind Vergleichskatalysatoren):**

| **Zusammensetzung** | **Katalysator** | **Menge** | **Konzentration**¹ | **Viskosität [Pa·s]** | | **HBZ** | |
|---|---|---|---|---|---|---|---|
| | | | | **frisch** | **gelagert²** | **frisch** | **gelagert²** |
| **Z14** | U1 | 1.14 g | 1.9 | 29.2 | 38.1 | 22' | 20' |
| **Z15** | U3 | 1.95 g | 1.9 | 29.7 | 44.8 | 45' | 18' |
| **Z16** | U4 | 2.36 g | 1.9 | 27.0 | 49.3 | 35' | 31' |
| **Z17** | U5 | 2.36 g | 1.9 | 27.8 | 51.0 | 30' | 30' |
| **Z18** | U6 | 1.50 g | 1.9 | 29.9 | 45.2 | 13' | 7' |
| **Z19** | U8 | 2.36 g | 1.9 | 28.7 | 45.3 | 36' | 31' |
| **Z20** | U9³ | 0.83 g | 1.9 | 20.7 | 39.5 | 13' | 14' |
| **Z21** | U10 | 1.40 g | 1.9 | 41.0 | 53.6 | 13' | 12' |
| **Z22** (Ref) | DBU | 0.28 g | 1.9 | 27.2 | 36.9 | 25' | 29' |
| **Z23** (Ref) | TMG | 0.21 g | 1.9 | 22.3 | 24.6 | 65' | 75' |

| | | | | | | | |
|---|---|---|---|---|---|---|---|
| ¹ mmol Amidin- oder Guanidin-Gruppen auf 100 gSilangruppen-haltiger Polyether. ² während 7 Tagen bei 70 °C in geschlossenem Gebinde. ³ als Lösung (25 Gew.-%) in N-Ethylpyrrolidon. | | | | | | | |

**Tabelle 4:**

| **Zusammensetzung** | **Oberfläche nach 24h** | **Zugfestigkeit** | **Bruchdehnung** | **E-Modul** | |
|---|---|---|---|---|---|
| | | | | **0-5%** | **0-50%** |
| **Z14** | trocken | 0.67 MPa | 101% | 1.27 MPa | 0.83 MPa |
| **Z15** | trocken | 0.75 MPa | 124% | 1.23 MPa | 0.82 MPa |
| **Z16** | trocken | 0.82 MPa | 130% | 1.14 MPa | 0.83 MPa |
| **Z17** | trocken | 0.85 MPa | 142% | 1.25 MPa | 0.82 MPa |
| **Z18** | trocken | 0.71 MPa | 113% | 1.09 MPa | 0.82 MPa |
| **Z19** | trocken | 0.81 MPa | 141% | 1.21 MPa | 0.84 MPa |
| **Z20** | trocken | 0.70 MPa | 103% | 1.28 MPa | 0.83 MPa |
| **Z21** | trocken | 0.78 MPa | 118% | 1.12 MPa | 0.85 MPa |
| **Z22** (Ref) | schmierig | 0.58 MPa | 72% | 1.16 MPa | 0.77 MPa |
| **Z23** (Ref) | klebrig | 0.62 MPa | 90% | 1.19 MPa | 0.75 MPa |

## Patentansprüche

1. Umsetzungsprodukt erhalten aus der Umsetzung von
- mindestens einem Amidin der Formel HZ oder HX-A-Z,
wobei
Z für eine über ein Stickstoff-Atom gebundene aliphatische Amidin-Gruppe steht,
A für einen zweiwertigen Kohlenwasserstoff-Rest mit 2 bis 30 C-Atomen, welcher gegebenenfalls ungesättigte Anteile und gegebenenfalls Ether-Sauerstoff oder sekundären oder tertiären Amin-Stickstoff enthält, steht, und
X für S oder NR⁷ steht, wobei R⁷ für einen Wasserstoff-Rest oder für einen Alkyl- oder Cycloalkyl- oder Aralkyl-Rest mit 1 bis 8 C-Atomen, welcher gegebenenfalls eine tertiäre Aminogruppe oder eine Amidin- oder Guanidin-Gruppe enthält, steht,
wobei A auch zusammen mit R⁷ für einen dreiwertigen Kohlenwasserstoff-Rest mit 5 bis 10 C-Atomen, welcher gegebenenfalls einen tertiären Amin-Stickstoff enthält, stehen kann, und
X und Z durch eine Kette von mindestens zwei C-Atomen voneinander getrennt sind,
- mit mindestens einem Polysiloxan der Formel (II), 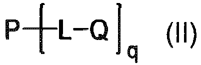 wobei
q für 1 oder 2 steht,
P für einen q-wertigen Polysiloxan-Rest mit 3 bis 100 Silicium-Atomen steht,
L für einen an ein Silicium-Atom von P gebundenen Alkylen-Rest mit 1 bis 12 C-Atomen steht, und
Q für eine Reaktivgruppe ausgewählt aus Glycidoxy, N-Aziridinyl, 1,3-Ketoester, 1,3-Ketoamid, (Meth)acrylat und (Meth)acrylamid steht.

2. Umsetzungsprodukt gemäss Anspruch 1, **dadurch gekennzeichnet, dass** Z für 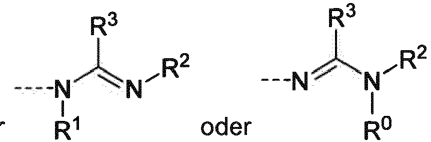 steht, wobei
R⁰ für einen Wasserstoff-Rest oder für einen Alkyl- oder Cycloalkyl- oder Aralkyl-Rest mit 1 bis 8 C-Atomen steht,
R¹ für einen Wasserstoff-Rest oder für einen Alkyl- oder Cycloalkyl- oder Aralkyl-Rest mit 1 bis 8 C-Atomen oder zusammen mit R² für R⁶ steht,
R² für einen Wasserstoff-Rest oder für einen Alkyl-, Cycloalkyl- oder Aralkyl-Rest mit 1 bis 18 C-Atomen, welcher gegebenenfalls Ether-Sauerstoff oder tertiären Amin-Stickstoff enthält, oder zusammen mit R¹ für R⁶ steht,
R³ für einen Wasserstoff-Rest oder für einen Alkyl- oder Cycloalkyl- oder Aralkyl-Rest mit 1 bis 12 C-Atomen steht,
wobei
R⁶ für einen gegebenenfalls substituierten 1,2-Ethylen-, 1,3-Propylen- oder 1,4-Butylen-Rest mit 2 bis 12 C-Atomen steht,
R² und R⁰ auch zusammen für einen Alkylen-Rest mit 3 bis 6 C-Atomen, welcher gegebenenfalls Ether-Sauerstoff oder tertiären Amin-Stickstoff enthält, stehen können,
R² und R³ auch zusammen für einen Alkylen-Rest mit 3 bis 6 C-Atomen stehen können.

3. Umsetzungsprodukt gemäss Anspruch 2, **dadurch gekennzeichnet, dass** R³ für einen Wasserstoff-Rest oder für einen Alkyl- oder Cycloalkyl- oder Aralkyl-Rest mit 1 bis 12 C-Atomen steht und R¹ und R² zusammen für R⁶ stehen.

4. Umsetzungsprodukt gemäss einem der Ansprüche 1 bis 3, **dadurch gekennzeichnet, dass** P für einen zweiwertigen Polysiloxan-Rest der Formel (IVa) steht, 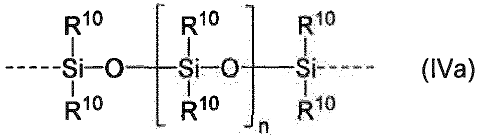 wobei
R¹⁰ unabhängig voneinander für einen einwertigen Kohlenwasserstoff-Rest mit 1 bis 12 C-Atomen steht, und
n für eine ganze Zahl von 1 bis 48 steht.

5. Umsetzungsprodukt gemäss einem der Ansprüche 1 bis 4, **dadurch gekennzeichnet, dass** das Amidin der Formel HZ oder HX-A-Z ein Amidin der Formel (IIIa) ist, 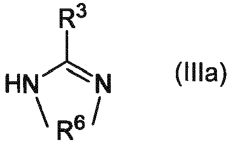 bei welchem R³ für einen Wasserstoff-Rest oder Methyl-Rest steht.

6. Umsetzungsprodukt gemäss einem der Ansprüche 1 bis 4, **dadurch gekennzeichnet, dass** das Amidin der Formel HZ oder HX-A-Z ein Amidin der Formel (IIIb) ist, 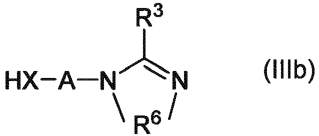 bei welchem R³ für einen Wasserstoff-Rest oder Methyl-Rest steht.

7. Verbindung der Formel (I), 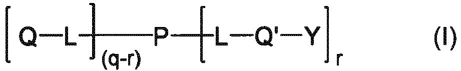 wobei
q für 1 oder 2 steht und r für 1 oder 2 steht, wobei (q-r) für 0 oder 1 steht,
P für einen q-wertigen Polysiloxan-Rest mit 3 bis 100 Silicium-Atomen steht,
L für einen an ein Silicium-Atom von P gebundenen Alkylen-Rest mit 1 bis 12 C-Atomen steht,
Q für eine Reaktivgruppe ausgewählt aus Glycidoxy, N-Aziridinyl, 1,3-Ketoester, 1,3-Ketoamid, (Meth)acrylat und (Meth)acrylamid steht,
Q' für eine zweiwertige Verbindungseinheit entstanden aus der Reaktion einer Reaktivgruppe Q mit HY steht, und
Y für Z oder für ---X-A-Z steht,
wobei
Z für eine über ein Stickstoff-Atom gebundene aliphatische Amidin-Gruppe steht,
A für einen zweiwertigen Kohlenwasserstoff-Rest mit 2 bis 30 C-Atomen, welcher gegebenenfalls ungesättigte Anteile und gegebenenfalls Ether-Sauerstoff oder sekundären oder tertiären Amin-Stickstoff enthält, steht, und
X für S oder NR⁷ steht, wobei R⁷ für einen Wasserstoff-Rest oder für einen Alkyl- oder Cycloalkyl- oder Aralkyl-Rest mit 1 bis 8 C-Atomen, welcher gegebenenfalls eine tertiäre Aminogruppe oder eine Amidin- oder Guanidin-Gruppe enthält, steht,
wobei A auch zusammen mit R⁷ für einen dreiwertigen Kohlenwasserstoff-Rest mit 5 bis 10 C-Atomen, welcher gegebenenfalls einen tertiären Amin-Stickstoff enthält, stehen kann, und
X und Z durch eine Kette von mindestens zwei C-Atomen voneinander getrennt sind.

8. Verbindung gemäss Anspruch 7, **dadurch gekennzeichnet, dass** Q' ausgewählt ist aus der Gruppe bestehend aus 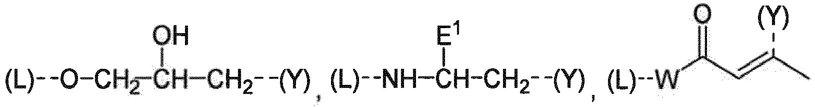 und 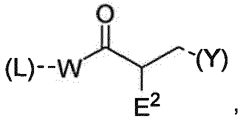 wobei
E¹ für einen Wasserstoff-Rest oder Methyl-Rest steht,
E² für einen Wasserstoff-Rest oder Methyl-Rest steht, und
W für O oder NR¹⁴ steht, wobei R¹⁴ für einen Wasserstoff-Rest oder für einen einwertigen Kohlenwasserstoffrest mit 1 bis 8 C-Atomen steht.

9. Verwendung eines Umsetzungsprodukts gemäss einem der Ansprüche 1 bis 6 und/oder einer Verbindung der Formel (I) gemäss einem der Ansprüche 7 oder 8 als Katalysator für die Vernetzung einer härtbaren Zusammensetzung.

10. Verwendung gemäss Anspruch 9, **dadurch gekennzeichnet, dass** die härtbare Zusammensetzung eine Zusammensetzung auf Basis von Silangruppen-haltigen Polymeren ist.

11. Verwendung gemäss Anspruch 10, **dadurch gekennzeichnet, dass** das Silangruppen-haltige Polymer ein Polyorganosiloxan mit endständigen Silangruppen ist.

12. Zusammensetzung enthaltend mindestens ein Silangruppen-haltiges Polymer und mindestens ein Umsetzungsprodukt gemäss einem der Ansprüche 1 bis 6 und/oder mindestens eine Verbindung der Formel (I) gemäss einem der Ansprüche 7 oder 8.

13. Zusammensetzung gemäss Anspruch 12, **dadurch gekennzeichnet, dass** sie einen Klebstoff oder einen Dichtstoff oder eine Beschichtung darstellt.

## Claims

1. Reaction product obtained from the reaction of
- at least one amidine of the formula HZ or HX-A-Z where
Z is an aliphatic amidine group bonded via a nitrogen atom,
A is a divalent hydrocarbyl radical which has 2 to 30 carbon atoms and optionally contains unsaturated components and optionally ether oxygen or secondary or tertiary amine nitrogen,
and
X is S or NR⁷ where R⁷ is a hydrogen radical or is an alkyl or cycloalkyl or aralkyl radical which has 1 to 8 carbon atoms and optionally contains a tertiary amino group or an amidine or guanidine group,
where A together with R⁷ may also be a trivalent hydrocarbyl radical which has 5 to 10 carbon atoms and optionally contains a tertiary amine nitrogen, and
X and Z are separated from one another by a chain of at least two carbon atoms,
- with at least one polysiloxane of the formula (II) 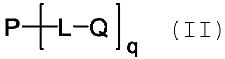 where
q is 1 or 2,
P is a q-valent polysiloxane radical having 3 to 100 silicon atoms,
L is an alkylene radical which is bonded to a silicon atom of P and has 1 to 12 carbon atoms, and
Q is a reactive group selected from glycidoxy, N-aziridinyl, 1,3-keto ester, 1,3-keto amide, (meth)acrylate and (meth)acrylamide.

2. Reaction product according to Claim 1, **characterized in that** Z is 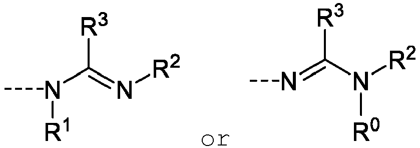 where
R⁰ is a hydrogen radical or an alkyl or cycloalkyl or aralkyl radical having 1 to 8 carbon atoms,
R¹ is a hydrogen radical or an alkyl or cycloalkyl or aralkyl radical having 1 to 8 carbon atoms or together with R² is R⁶,
R² is a hydrogen radical or an alkyl, cycloalkyl or aralkyl radical which has 1 to 18 carbon atoms and optionally contains ether oxygen or tertiary amine nitrogen, or together with R¹ is R⁶,
R³ is a hydrogen radical or an alkyl or cycloalkyl or aralkyl radical having 1 to 12 carbon atoms,
where
R⁶ is an optionally substituted 1,2-ethylene, 1,3-propylene or 1,4-butylene radical having 2 to 12 carbon atoms,
R² and R⁰ together may also be an alkylene radical which has 3 to 6 carbon atoms and optionally contains ether oxygen or tertiary amine nitrogen,
R² and R³ together may also be an alkylene radical having 3 to 6 carbon atoms.

3. Reaction product according to Claim 2, **characterized in that** R³ is a hydrogen radical or an alkyl or cycloalkyl or aralkyl radical having 1 to 12 carbon atoms, and R¹ and R² together are R⁶.

4. Reaction product according to any of Claims 1 to 3, **characterized in that** P is a divalent polysiloxane radical of the formula (IVa) 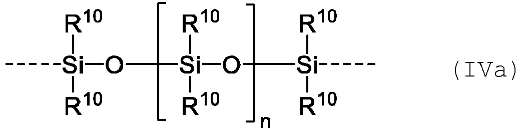 where
R¹⁰ is independently a monovalent hydrocarbyl radical having 1 to 12 carbon atoms, and
n is an integer from 1 to 48.

5. Reaction product according to any of Claims 1 to 4, **characterized in that** the amidine of the formula HZ or HX-A-Z is an amidine of the formula (IIIa) 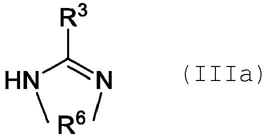 in which R³ is a hydrogen radical or methyl radical.

6. Reaction product according to any of Claims 1 to 4, **characterized in that** the amidine of the formula HZ or HX-A-Z is an amidine of the formula (IIIb) 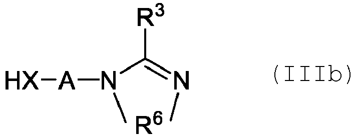 in which R³ is a hydrogen radical or methyl radical.

7. Compound of the formula (I) 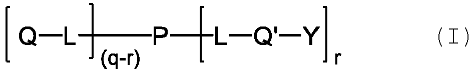 where
q is 1 or 2 and r is 1 or 2, where (q-r) is 0 or 1,
P is a q-valent polysiloxane radical having 3 to 100 silicon atoms,
L is an alkylene radical which is bonded to a silicon atom of P and has 1 to 12 carbon atoms,
Q is a reactive group selected from glycidoxy, N-aziridinyl, 1,3-keto ester, 1,3-keto amide, (meth)acrylate and (meth)acrylamide,
Q' is a divalent connecting unit formed from the reaction of a reactive Q group with HY, and
Y is Z or is ---X-A-Z
where
Z is an aliphatic amidine group bonded via a nitrogen atom,
A is a divalent hydrocarbyl radical which has 2 to 30 carbon atoms and optionally contains unsaturated components and optionally ether oxygen or secondary or tertiary amine nitrogen, and
X is S or NR⁷ where R⁷ is a hydrogen radical or is an alkyl or cycloalkyl or aralkyl radical which has 1 to 8 carbon atoms and optionally contains a tertiary amino group or an amidine or guanidine group,
where A together with R⁷ may also be a trivalent hydrocarbyl radical which has 5 to 10 carbon atoms and optionally contains a tertiary amine nitrogen, and
X and Z are separated from one another by a chain of at least two carbon atoms.

8. Compound according to Claim 7, **characterized in that** Q' is selected from the group consisting of 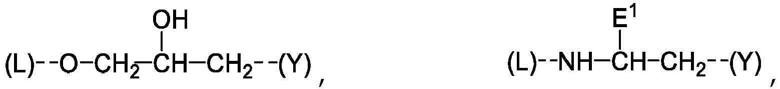 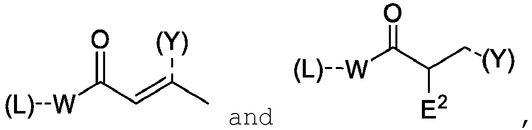 where
E¹ is a hydrogen radical or methyl radical,
E² is a hydrogen radical or methyl radical, and
W is O or NR¹⁴ where R¹⁴ is a hydrogen radical or is a monovalent hydrocarbyl radical having 1 to 8 carbon atoms.

9. Use of a reaction product according to any of Claims 1 to 6 and/or of a compound of the formula (I) according to either of Claims 7 and 8 as catalyst for the crosslinking of a curable composition.

10. Use according to Claim 9, **characterized in that** the curable composition is a composition based on polymers containing silane groups.

11. Use according to Claim 10, **characterized in that** the polymer containing silane groups is a polyorganosiloxane having terminal silane groups.

12. Composition comprising at least one polymer containing silane groups and at least one reaction product according to any of Claims 1 to 6 and/or at least one compound of the formula (I) according to either of Claims 7 and 8.

13. Composition according to Claim 12, **characterized in that** it is an adhesive or a sealant or a coating.

## Revendications

1. Produit de réaction obtenu à partir de la réaction
- d'au moins une amidine de la formule HZ ou HX-A-Z, où
Z représente un groupe amidine aliphatique relié par l'intermédiaire d'un atome d'azote,
A représente un radical hydrocarboné bivalent de 2 à 30 atomes C, qui contient éventuellement des fractions insaturées et éventuellement un oxygène d'éther ou un azote d'amine secondaire ou tertiaire, et
X représente S ou NR⁷, où R⁷ représente un radical hydrogène ou un radical alkyle ou cycloalkyle ou aralkyle de 1 à 8 atomes C, qui contient éventuellement un groupe amino tertiaire ou un groupe amidine ou guanidine,
où A peut également représenter conjointement avec R⁷ un radical hydrocarboné trivalent de 5 à 10 atomes C, qui contient éventuellement un azote d'amine tertiaire, et
X et Z sont séparés l'un de l'autre par une chaîne d'au moins deux atomes C,
- avec au moins un polysiloxane de la formule (II), 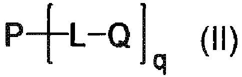 où
q représente 1 ou 2,
P représente un radical polysiloxane q-valent de 3 à 100 atomes de silicium,
L représente un radical alkylène de 1 à 12 atomes C, relié à un atome de silicium de P, et
Q représente un groupe réactif choisi parmi glycidoxy, N-aziridinyle, 1,3-cétoester, 1,3-cétoamide, (méth)acrylate et (méth)acrylamide.

2. Produit de réaction selon la revendication 1, **caractérisé en ce que** Z représente 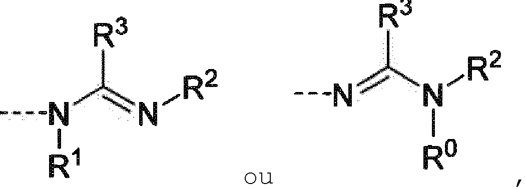 où
R⁰ représente un radical hydrogène ou un radical alkyle ou cycloalkyle ou aralkyle de 1 à 8 atomes C,
R¹ représente un radical hydrogène ou un radical alkyle ou cycloalkyle ou aralkyle de 1 à 8 atomes C ou, conjointement avec R², R⁶,
R² représente un radical hydrogène ou un radical alkyle, cycloalkyle ou aralkyle de 1 à 18 atomes C, qui contient éventuellement un oxygène d'éther ou un azote d'amine tertiaire, ou, conjointement avec R¹, R⁶,
R³ représente un radical hydrogène ou un radical alkyle ou cycloalkyle ou aralkyle de 1 à 12 atomes C,
où
R⁶ représente un radical 1,2-éthylène, 1,3-propylène ou 1,4-butylène de 2 à 12 atomes C, éventuellement substitué,
R² et R⁰ peuvent également représenter ensemble un radical alkylène de 3 à 6 atomes C, qui contient éventuellement un oxygène d'éther ou un azote d'amine tertiaire,
R² et R³ peuvent également représenter ensemble un radical alkylène de 3 à 6 atomes C.

3. Produit de réaction selon la revendication 2, **caractérisé en ce que** R³ représente un radical hydrogène ou un radical alkyle ou cycloalkyle ou aralkyle de 1 à 12 atomes C, et R¹ et R² représentent ensemble R⁶.

4. Produit de réaction selon l'une quelconque des revendications 1 à 3, **caractérisé en ce que** P représente un radical polysiloxane bivalent de la formule (IVa), 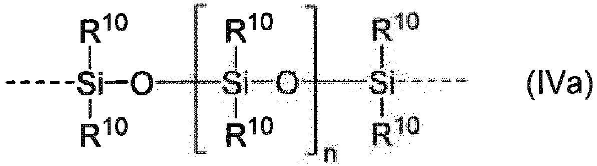 où
les R¹⁰ représentent indépendamment les uns des autres un radical hydrocarboné monovalent de 1 à 12 atomes C, et
n représente un nombre entier de 1 à 48.

5. Produit de réaction selon l'une quelconque des revendications 1 à 4, **caractérisé en ce que** l'amidine de la formule HZ ou HX-A-Z est une amidine de la formule (IIIa), 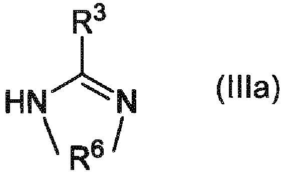 dans laquelle R³ représente un radical hydrogène ou un radical méthyle.

6. Produit de réaction selon l'une quelconque des revendications 1 à 4, **caractérisé en ce que** l'amidine de la formule HZ ou HX-A-Z est une amidine de la formule (IIIb), 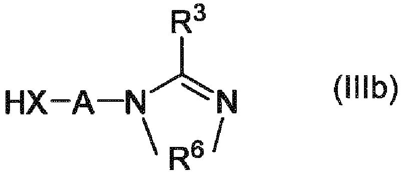 dans laquelle R³ représente un radical hydrogène ou un radical méthyle.

7. Composé de la formule (I), 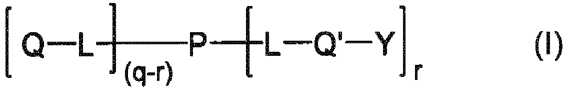 où
q représente 1 ou 2 et r représente 1 ou 2, où (q-r) représente 0 ou 1,
P représente un radical polysiloxane q-valent de 3 à 100 atomes de silicium,
L représente un radical alkylène de 1 à 12 atomes C, relié à un atome de silicium de P,
Q représente un groupe réactif choisi parmi glycidoxy, N-aziridinyle, 1,3-cétoester, 1,3-cétoamide, (méth)acrylate et (méth)acrylamide,
Q' représente une unité de liaison bivalente formée par la réaction d'un groupe réactif Q avec HY, et
Y représente Z ou ---X-A-Z,
où
Z représente un groupe amidine aliphatique relié par l'intermédiaire d'un atome d'azote,
A représente un radical hydrocarboné bivalent de 2 à 30 atomes C, qui contient éventuellement des fractions insaturées et éventuellement un oxygène d'éther ou un azote d'amine secondaire ou tertiaire, et
X représente S ou NR⁷, où R⁷ représente un radical hydrogène ou un radical alkyle ou cycloalkyle ou aralkyle de 1 à 8 atomes C, qui contient éventuellement un groupe amino tertiaire ou un groupe amidine ou guanidine,
où A peut également représenter conjointement avec R⁷ un radical hydrocarboné trivalent de 5 à 10 atomes C, qui contient éventuellement un azote d'amine tertiaire, et
X et Y sont séparés l'un de l'autre par une chaîne d'au moins deux atomes C.

8. Composé selon la revendication 7, **caractérisé en ce que** Q' est choisi dans le groupe constitué par 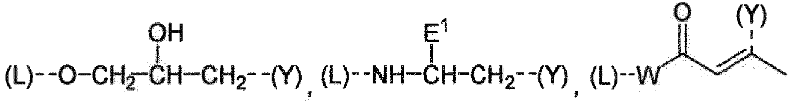 et 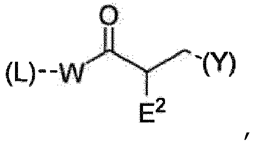 où
E¹ représente un radical hydrogène ou un radical méthyle,
E² représente un radical hydrogène ou un radical méthyle, et
W représente O ou NR¹⁴, où R¹⁴ représente un radical hydrogène ou un radical hydrocarboné monovalent de 1 à 8 atomes C.

9. Utilisation d'un produit de réaction selon l'une quelconque des revendications 1 à 6 et/ou d'un composé de la formule (I) selon l'une quelconque des revendications 7 ou 8 en tant que catalyseur pour la réticulation d'une composition durcissable.

10. Utilisation selon la revendication 9, **caractérisée en ce que** la composition durcissable est une composition à base de polymères contenant des groupes silane.

11. Utilisation selon la revendication 10, **caractérisée en ce que** le polymère contenant des groupes silane est un polyorganosiloxane muni de groupes silane terminaux.

12. Composition contenant au moins un polymère contenant des groupes silane et au moins un produit de réaction selon l'une quelconque des revendications 1 à 6 et/ou au moins un composé de la formule (I) selon l'une quelconque des revendications 7 ou 8.

13. Composition selon la revendication 12, **caractérisée en ce qu'**elle consiste en un adhésif ou un agent d'étanchéité ou un revêtement.
